# EUROPEAN PATENT SPECIFICATION

(11) **EP 4 576 137 B1**
(45) Date of publication and mention of the grant of the patent: **11.11.2026**
(21) Application number: 24219771.3
(22) Date of filing: 13.12.2024
(51) Int. Cl.: H01G 4/012, H01G 4/30, H01G 4/008, H01G 4/232, H01G 4/12

(54) **MULTILAYER ELECTRONIC COMPONENT**
MEHRSCHICHTIGES ELEKTRONISCHES BAUTEIL
COMPOSANT ÉLECTRONIQUE MULTICOUCHE

(30) Priority: 22.12.2023 KR 20230189541; 04.03.2024 KR 20240030766
(43) Date of publication of application: 25.06.2025
(73) Proprietor: Samsung Electro-Mechanics Co., Ltd., Suwon-si, Gyeonggi-do (KR)
(72) Inventor: Jun, Ho In, Suwon-si, Gyeonggi-do (KR); Lee, Chul Seung, Suwon-si, Gyeonggi-do (KR); Kim, Kyo Sik, Suwon-si, Gyeonggi-do (KR); Oh, Seong Min, Suwon-si, Gyeonggi-do (KR)
(74) Representative: Grünecker Patent- und Rechtsanwälte PartG mbB

(56) References cited:
- US-A1- 2008 100 987
- US-A1- 2018 035 545
- US-A1- 2023 343 516

## Description

### CROSS-REFERENCE TO RELATED APPLICATION(S)

This application claims benefit of priority to Korean Patent Application No. 10-2024-0030766 filed on March 4, 2024 and Korean Patent Application No. 10-2023-0189541 filed on December 22, 2023 in the Korean Intellectual Property Office.

### BACKGROUND

### 1. FIELD

The present disclosure relates to a multilayer electronic component.

### 2. DESCRIPTION OF RELATED ART

A multilayer ceramic component (MLCC), a multilayer electronic component, may be a chip condenser mounted on the printed circuit boards of various electronic products including image display devices such as a liquid crystal display (LCD) and a plasma display panel (PDP), a computer, a smartphone, a mobile phone, or the like, and charging or discharging electricity therein or therefrom. Such a multilayer ceramic capacitor may be used as a component of various electronic devices, since a multilayer ceramic capacitor may have a small size and high capacitance and may be easily mounted.

An MLCC may include generally a body including a plurality of internal electrodes alternately disposed with dielectric layers, and an external electrode disposed externally of the body and connected to the plurality of internal electrodes.

During the firing process for manufacturing an MLCC, the internal electrode may shrink or cracks may occur in the body, such that connection between the internal electrode and the external electrode may be broken, which may cause a reduction of capacitance of an MLCC.
US 2023/343516 A1 refers to a ceramic electronic component. According to figure 1 of this document, a connection conductor is connected to an external electrode, and extends through a surface or an interior of a ceramic body to electrically connect to an internal electrode.
US 2008/100987 A1 refers to a multilayer capacitor, and a manufacturing method thereof. A plurality of pin hole conducting portions electrically connect a pair of a first external conductor layer each other or a pair of a second external conductor layer to each other, adjacently to dielectric layers, in a stacking direction Z.
US 2018/035545 A1 refers to a multilayer capacitor and a board having the same. The multilayer capacitor includes a capacitor body including dielectric layers and a plurality of first and second internal electrodes, first and second via electrodes, and first to fourth external electrodes.

### SUMMARY

The invention is what is claimed in the independent claims.

Preferred embodiments are specified in the dependent claims.

An embodiment of the present disclosure is to provide a multilayer electronic component having excellent mechanical strength and electrical properties.

According to an embodiment of the present invention, a multilayer electronic component includes a body including a dielectric layer and first and second internal electrodes alternately disposed with the dielectric layer, and including first and second surfaces opposing each other in a first direction, third and fourth surfaces connected to the first and second surfaces and opposing each other in a second direction, and fifth and sixth surfaces connected to the first to fourth surfaces and opposing each other in a third direction; a first external electrode disposed on at least one surface among the first surface, the second surface, the fifth surface, and the sixth surface, and connected to the first internal electrodes; a second external electrode disposed on at least one surface among the first surface, the second surface, the third surface, and the fourth surface, and connected to the second internal electrodes; and a first connection electrode penetrating the dielectric layer and connecting two first internal electrodes adjacent to each other in the first direction. In the first connection electrode, a plurality of first via electrodes shifted from each other in a direction perpendicular to the first direction are laminated in the first direction.

According to an embodiment of the present disclosure, a multilayer electronic component includes a body including first and second surfaces opposing each other in a first direction, third and fourth surfaces connected to the first and second surfaces and opposing each other in a second direction, and fifth and sixth surfaces connected to the first to fourth surfaces and opposing each other in a third direction, the body including a first internal electrode layer including a first dielectric layer and a first internal electrode disposed on the first dielectric layer and including a first main portion and a first lead portion extending from the first main portion to the fifth surface or sixth surface, the body including a second internal electrode layer including a second dielectric layer, a second internal electrode disposed on the second dielectric layer and overlapping the first main portion in the first direction, and a first auxiliary electrode spaced apart from the second internal electrode in the third direction, wherein the first and second internal electrodes layers are alternately disposed in the first direction; a first external electrode disposed on at least one surface among the first surface, the second surface, the fifth surface, and the sixth surface, and connected to the first internal electrode; a second external electrode disposed on at least one surface among the first surface, the second surface, the third surface, and the fourth surface, and connected to the second internal electrode; a first via electrode penetrating the first dielectric layer and connecting the first lead portion to the first auxiliary electrode; and a second via electrode penetrating the second dielectric layer and connecting the first lead portion to the first auxiliary electrode. The first via electrode and the second via electrode are shifted from each other in a direction perpendicular to the first direction.

According to an embodiment of the present disclosure, a multilayer electronic component includes a body including a dielectric layer and first and second internal electrodes alternately disposed with the dielectric layer, and including first and second surfaces opposing each other in a first direction, third and fourth surfaces connected to the first and second surfaces and opposing each other in a second direction, and fifth and sixth surfaces connected to the first to fourth surfaces and opposing each other in a third direction; a first external electrode disposed on at least one surface among the first surface, the second surface, the fifth surface, and the sixth surface, and connected to the first internal electrodes; a second external electrode disposed on at least one surface among the first surface, the second surface, the third surface, and the fourth surface, and connected to the second internal electrodes; and a first connection electrode penetrating the dielectric layer and connecting two first internal electrodes adjacent to each other in the first direction. The first connection electrode including one first via electrode extending directly from one of the two first internal electrodes and another first via electrode extending directly from another of the two first internal electrodes. The one first via electrode and the another first via electrode are both tapered in the first direction.

According to an embodiment of the present disclosure, a multilayer electronic component includes a body including first and second surfaces opposing each other in a first direction, third and fourth surfaces connected to the first and second surfaces and opposing each other in a second direction, and fifth and sixth surfaces connected to the first to fourth surfaces and opposing each other in a third direction, the body including a first internal electrode layer including a first dielectric layer and a first internal electrode disposed on the first dielectric layer and including a first main portion and a first lead portion extending from the first main portion to the fifth surface or sixth surface, the body including a second internal electrode layer including a second dielectric layer, a second internal electrode disposed on the second dielectric layer and overlapping the first main portion in the first direction, and a first auxiliary electrode spaced apart from the second internal electrode in the third direction, wherein the first and second internal electrodes layers are alternately disposed in the first direction; a first external electrode disposed on at least one surface among the first surface, the second surface, the fifth surface, and the sixth surface, and connected to the first internal electrode; a second external electrode disposed on at least one surface among the first surface, the second surface, the third surface, and the fourth surface, and connected to the second internal electrode; a first via electrode penetrating the first dielectric layer and directly connecting the first lead portion to the first auxiliary electrode; and a second via electrode penetrating the second dielectric layer and directly connecting the first lead portion to the first auxiliary electrode. The first via electrode and the second via electrode are both tapered in the first direction.

### BRIEF DESCRIPTION OF DRAWINGS

The and other aspects, features, and advantages of the present disclosure will be more clearly understood from the following detailed description, taken in combination with the accompanying drawings, in which:
FIG. 1 is a perspective diagram illustrating a multilayer electronic component according to a first embodiment of the present disclosure;
FIG. 2 is a cross-sectional diagram taken along line I1-I1' in FIG. 1;
FIG. 3 is a cross-sectional diagram taken along line II1-II1' in FIG. 1;
FIG. 4 is a cross-sectional diagram taken along line III1-III1' in FIG. 1;
FIG. 5 is a cross-sectional diagram taken along line IV1-IV1' in FIG. 2;
FIG. 6 is a cross-sectional diagram taken along line V1-V1' in FIG. 2;
FIG. 7A is a cross-sectional diagram illustrating a portion of FIG. 2 and FIG. 7B is a cross-sectional diagram showing an example corresponding to FIG. 7A to have a maximum shift;
FIG. 8 is a perspective diagram illustrating a multilayer electronic component according to a first modified example of a first embodiment of the present disclosure;
FIG. 9 is a cross-sectional diagram taken along line I2-I2' in FIG. 8;
FIG. 10 is a cross-sectional diagram taken along line II2-II2' in FIG. 8;
FIG. 11 is a cross-sectional diagram taken along line IV2-IV2' in FIG. 9;
FIG. 12 is a cross-sectional diagram taken along line V2-V2' in FIG. 9;
FIG. 13 is a perspective diagram illustrating a multilayer electronic component according to a second modified example of a first embodiment of the present disclosure;
FIG. 14 is a cross-sectional diagram taken along line I3-I3' in FIG. 13;
FIG. 15 is a cross-sectional diagram taken along line II3-II3' in FIG. 13;
FIG. 16 is a cross-sectional diagram taken along line IV3-IV3' in FIG. 14;
FIG. 17 is a cross-sectional diagram taken along line V3-V3' in FIG. 14;
FIG. 18 is a perspective diagram illustrating a multilayer electronic component according to a third modified example of a first embodiment of the present disclosure;
FIG. 19 is a cross-sectional diagram taken along line I4-I4' in FIG. 18;
FIG. 20 is a cross-sectional diagram taken along line II4-II4' in FIG. 18;
FIG. 21 is a cross-sectional diagram taken along line III4-III4' in FIG. 18;
FIG. 22 is a cross-sectional diagram taken along line V14-VI4' in FIG. 20;
FIG. 23 is a perspective diagram illustrating a multilayer electronic component according to a fourth modified example of a first embodiment of the present disclosure;
FIG. 24 is a cross-sectional diagram taken along line I5-I5' in FIG. 23;
FIG. 25 is a cross-sectional diagram taken along line II5-II5' in FIG. 23;
FIG. 26 is a cross-sectional diagram taken along line III5-III5' in FIG. 23;
FIG. 27 is a cross-sectional diagram taken along line V15-VI5' in FIG. 25;
FIG. 28 is a perspective diagram illustrating a multilayer electronic component according to a fifth modified example of a first embodiment of the present disclosure;
FIG. 29 is a cross-sectional diagram taken along line I6-I6' in FIG. 28;
FIG. 30 is a cross-sectional diagram taken along line II6-II6' in FIG. 28;
FIG. 31 is a perspective diagram illustrating a multilayer electronic component according to a sixth modified example of a first embodiment of the present disclosure;
FIG. 32 is a cross-sectional diagram taken along line I7-I7' in FIG. 31;
FIG. 33 is a cross-sectional diagram taken along line II7-II7' in FIG. 31;
FIG. 34 is a perspective diagram illustrating a multilayer electronic component according to a second embodiment of the present disclosure;
FIG. 35 is an exploded perspective diagram illustrating a portion of a body of a multilayer electronic component according to a second embodiment of the present disclosure;
FIG. 36 is a cross-sectional diagram taken along line I8-I8' in FIG. 34;
FIG. 37 is a cross-sectional diagram taken along line II8-II8' in FIG. 34;
FIG. 38 is a cross-sectional diagram taken along line III8-III8' in FIG. 34;
FIG. 39 is a plan diagram illustrating a first internal electrode layer of a multilayer electronic component according to a second embodiment of the present disclosure;
FIG. 40 is a plan diagram illustrating a second internal electrode layer of a multilayer electronic component according to a second embodiment of the present disclosure;
FIG. 41 is an enlarged cross-sectional diagram of FIG. 36;
FIG. 42 is a perspective diagram illustrating a multilayer electronic component according to a first modified example of a second embodiment of the present disclosure;
FIG. 43 is an exploded perspective diagram illustrating a portion of a body of a multilayer electronic component according to a first modified example of a second embodiment of the present disclosure;
FIG. 44 is a cross-sectional diagram taken along line I9-I9' in FIG. 42;
FIG. 45 is a cross-sectional diagram taken along line II9-II9' in FIG. 42;
FIG. 46 is a plan diagram illustrating a first internal electrode layer of a multilayer electronic component according to a first modified example of a second embodiment of the present disclosure;
FIG. 47 is a plan diagram illustrating a second internal electrode layer of a multilayer electronic component according to a first modified example of a second embodiment of the present disclosure;
FIG. 48 is a perspective diagram illustrating a multilayer electronic component according to a second modified example of a second embodiment of the present disclosure;
FIG. 49 is a cross-sectional diagram taken along line I10-I10' in FIG. 48;
FIG. 50 is a cross-sectional diagram taken along line II10-II10' in FIG. 48;
FIG. 51 is a perspective diagram illustrating a multilayer electronic component according to a third modified example of a second embodiment of the present disclosure;
FIG. 52 is a cross-sectional diagram taken along line I11-I11' in FIG. 51;
FIG. 53 is a cross-sectional diagram taken along line II11-II11' in FIG. 51;
FIG. 54 is a perspective diagram illustrating a multilayer electronic component according to a fourth modified example of a second embodiment of the present disclosure;
FIG. 55 is a cross-sectional diagram taken along line II2-II2' in FIG. 54;
FIG. 56 is a cross-sectional diagram taken along line II12-II12' in FIG. 54;
FIG. 57 is a cross-sectional diagram illustrating a filling and printing process for manufacturing a multilayer electronic component according to a first or second embodiment of the present disclosure;
FIGS. 58 to 60 are cross-sectional diagrams illustrating a modified example of FIG. 57;
FIG. 61 is a plan diagram illustrating a dielectric sheet having an internal electrode pattern and vias formed thereon for manufacturing a multilayer electronic component according to a first embodiment of the present disclosure; and
FIG. 62 is a plan diagram illustrating a dielectric sheet having an internal electrode pattern and vias formed thereon for manufacturing a multilayer electronic component according to a second embodiment of the present disclosure.

### DETAILED DESCRIPTION

Hereinafter, embodiments of the present disclosure will be described as below with reference to the accompanying drawings.

These embodiments are described in sufficient detail to enable those skilled in the art to practice the invention. It is to be understood that the various embodiments of the invention, although different, are not necessarily mutually exclusive. For example, structures, shapes, and sizes described as examples in embodiments in the present disclosure may be implemented in another embodiment. Further, modifications of positions or arrangements of elements in embodiments may be made. The following detailed description is, accordingly, not to be taken in a limiting sense, and the scope of the present disclosure are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a thickness (T) direction, the second direction may be defined as a length (L) direction, and the third direction may be defined as a width (W) direction.

### Multilayer Electronic Component

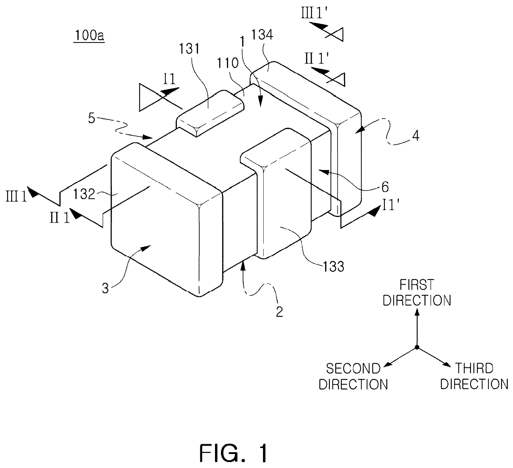

FIG. 1 is a perspective diagram illustrating a multilayer electronic component according to a first embodiment.

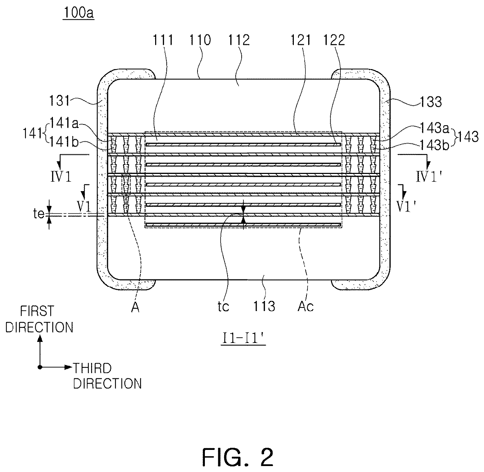

FIG. 2 is a cross-sectional diagram taken along line I1-I1' in FIG. 1.

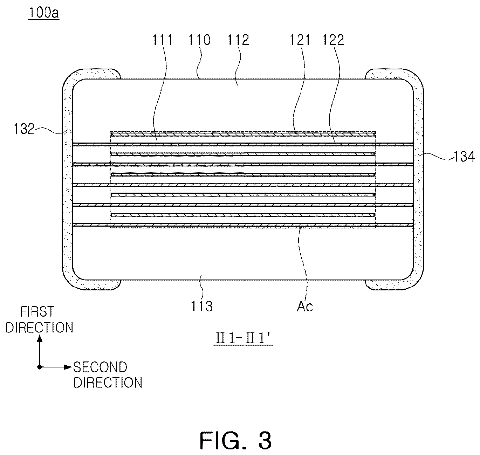

FIG. 3 is a cross-sectional diagram taken along line II1-II1' in FIG. 1.

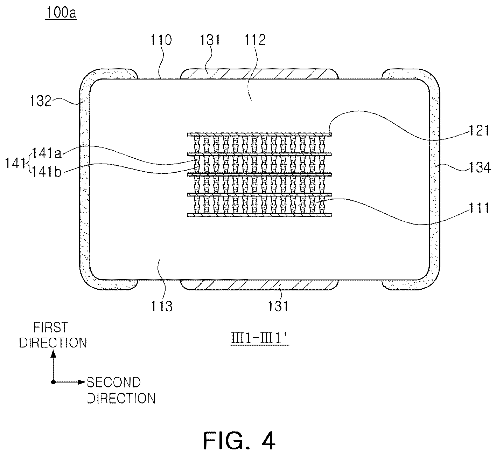

FIG. 4 is a cross-sectional diagram taken along line III1-III1' in FIG. 1.

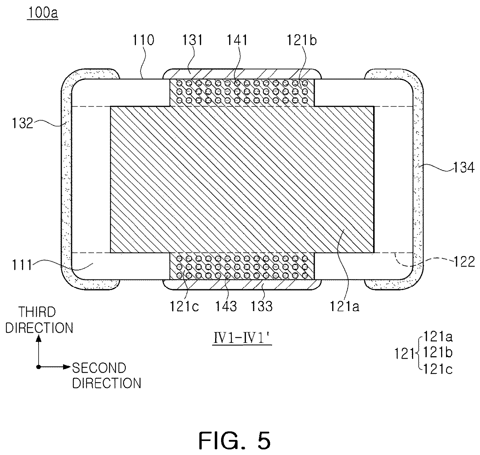

FIG. 5 is a cross-sectional diagram taken along line IV1-IV1' in FIG. 2.

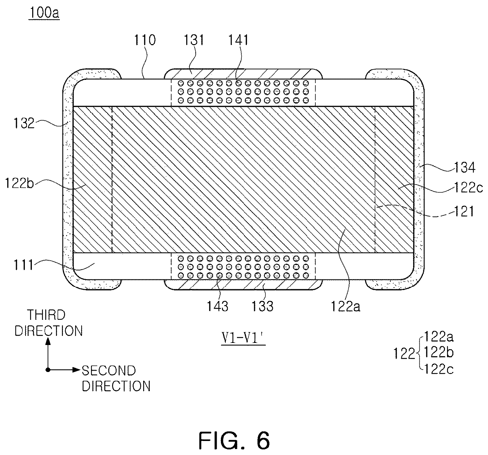

FIG. 6 is a cross-sectional diagram taken along line V1-V1' in FIG. 2.

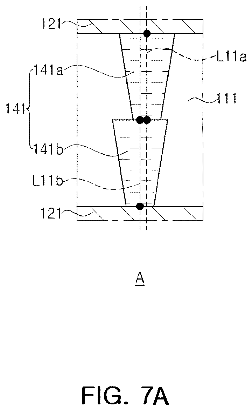

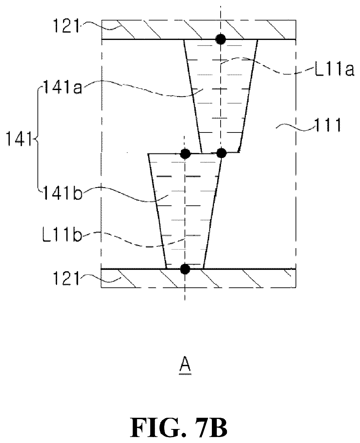

FIG. 7 is a cross-sectional diagram illustrating a portion of FIG. 2 and FIG. 7B is a cross-sectional diagram showing an example corresponding to FIG. 7A to have a maximum shift.

Hereinafter, a multilayer electronic component 100a according to an embodiment will be described in greater detail with reference to FIGS. 1 to 7. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

A size of the multilayer electronic component 100a is not limited to any particular example. However, a dimension (L size) in the second direction of the multilayer electronic component 100a may be, for example, 0.2 mm to 3.2 mm, the dimension (W size) in the third direction of the multilayer electronic component 100a may be, for example, 0.1 mm to 2.5 mm, and the dimension (T size) in the first direction of the multilayer electronic component 100a may be, for example, 0.05 mm to 2.5 mm.

The multilayer electronic component 100a according to an embodiment may include a body 110 including a dielectric layer 111 and internal electrodes 121 and 122, external electrodes 131, 132, 133, and 134, and connection electrodes 141 and 143.

The shape of the body 110 may not be limited to any particular shape, but as illustrated, the body 110 may have a hexahedral shape or a shape similar to a hexahedral shape. Due to reduction of ceramic powder included in the body 110 during a sintering process or polishing of corners, the body 110 may not have an exactly hexahedral shape formed by linear lines but may have a substantially hexahedral shape.

The body 110 may have first and second surfaces 1 and 2 opposing each other in the first direction, third and fourth surfaces 3 and 4 connected to the first and second surfaces 1 and 2 and opposing in the second direction, and fifth and sixth surfaces 5 and 6 connected to the first and second surfaces 1 and 2 and the third and fourth surfaces 3 and 4 and opposing each other in the third direction.

The body 110 may include the dielectric layer 111 and the first and second internal electrodes 121 and 122 alternately disposed in the first direction with the dielectric layer 111 interposed therebetween. The plurality of dielectric layers 111 forming the body 110 may be in a sintered state, and boundaries between adjacent dielectric layers 111 may be integrated with each other such that boundaries therebetween may not be distinct without using a scanning electron microscope (SEM).

The dielectric layer 111 may include a perovskite-type compound represented by ABO₃ as a main component, for example. The perovskite compound represented by ABO₃ may be BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), Ba(Ti_{1-y}Zr_{y})O₃ (0<y<1), CaZrO₃, or (Ca₁₋ₓSrₓ)(Zr_{1-y}Ti_{y})O₃ (0<x≤0.5, 0<y≤0.5).

The body 110 may include a first internal electrode 121 and a second internal electrode 122 alternately disposed with the dielectric layer 111 interposed therebetween. That is, the first internal electrodes 121 and the second internal electrode 122, a pair of electrodes having different polarities, may be disposed to oppose each other with the dielectric layer 111 interposed therebetween. The first internal electrodes 121 and the second internal electrode 122 may be electrically separated from each other by the dielectric layer 111 interposed therebetween.

The metal included in the internal electrodes 121 and 122 may be one or more of Ni, Cu, Pd, Ag, Au, Pt, Sn, W, Ti and alloys thereof, and may include Ni more preferably, but an embodiment thereof is not limited thereto.

The first internal electrode 121 may include a first main portion 121a overlapping the second internal electrode 122 in the first direction and a first lead portion 121b and 121c extending from the first main portion 121a toward the fifth surface 5 or the sixth surface 6. The first internal electrode 121 may be spaced apart from, for example, the third and fourth surfaces 3 and 4, and may be exposed to the fifth and sixth surfaces 5 and 6 through a pair of first lead portions 121b and 121c. However, an embodiment thereof is not limited thereto, and, although not illustrated, the first internal electrode 121 may be exposed to only one surface of the fifth and sixth surfaces 5 and 6.

The first main portion 121a may have, for example, a flat plate shape perpendicular to the first direction. The first main portion 121a may be spaced apart from an external surface of the body 110.

The first lead portions 121b and 121c may have a smaller dimension in the second direction than a dimension of the first main portion 121a. Meanwhile, in the drawing, the dimension in the second direction of the first lead portions 121b and 121c may be constant, but an embodiment thereof is not limited thereto. For example, the dimension in the second direction of the first lead portions 121b and 121c may gradually decrease from the first main portion 121a to the first external electrodes 131 and 133, or may gradually increase from the first main portion 121a to the first external electrodes 131 and 133.

Referring to FIGS. 2 and 5, in an embodiment, a thickness te of an end exposed to the fifth surface 5 or the sixth surface 6 of the first lead portion 121b and 121c may be greater than the thickness tc in the third direction of the central portion of the first main portion 121a. Accordingly, connectivity between the first internal electrode 121 and the first external electrodes 131 and 133 may be improved.

The second internal electrode 122 may include a second main portion 122a overlapping the first internal electrode 121 in the first direction and a second lead portion 122b and 122c extending from the second main portion 122a toward the third surface 3 or the fourth surface 4. The second internal electrode 122 may be spaced apart from, for example, the fifth and sixth surfaces 5 and 6, and exposed to the third and fourth surfaces 3 and 4 through a pair of second lead portions 122b and 122c.

The second main portion 122a may have, for example, a flat plate shape perpendicular to the first direction. The second main portion 122a may be spaced apart from the external surface of the body 110.

In the drawing, the dimension in the third direction of the second lead portions 122b and 122c may be constant, but an embodiment thereof is not limited thereto. For example, the dimension in the second direction of the second lead portion 122b and 122c may gradually decrease from the second main portion 122a to the second external electrodes 132 and 134, or may gradually increase from the second main portion 122a to the second external electrodes 132 and 134.

An average thickness of the dielectric layer 111 and the internal electrodes 121 and 122 is not limited to any particular example. The average thickness of the dielectric layer 111 may be, for example, 0.1 µm to 10 µm, 0.1 µm to 5 µm, 0.1 µm to 2 µm, or 0.1 µm to 0.4 µm. The average thickness of the internal electrodes 121 and 122 may be, for example, 0.1 µm to 3.0 µm, 0.1 µm to 1.0 µm, or 0.1 µm to 0.4 µm.

An average thickness of the dielectric layer 111 and an average thickness of the internal electrodes 121 and 122 may indicate sizes of the dielectric layer 111 and the internal electrodes 121 and 122 in the first direction, respectively. The average thickness of the dielectric layer 111 and the average thickness of the internal electrodes 121 and 122 may be measured by scanning a cross-section in the first and second directions of the body 110 using a scanning electron microscope (SEM) with a magnification of 10,000. More specifically, the average thickness of the dielectric layer 111 may be measured from the thicknesses of the dielectric layer 111 at 30 points at an equal distance in the second direction. Also, the average thickness of internal electrodes 121 and 122 may be measured by measuring the thickness at multiple points of one internal electrode 121 and 122, for example, 30 points at an equal distance in the second direction. The 30 points at an equal distance may be designated in capacitance formation portion Ac. By measuring the average value after performing the average value measurements on ten dielectric layers 111 and ten internal electrodes 121 and 122, respectively, the average thickness of the dielectric layer 111 and the average thickness of the internal electrodes 121 and 122 may be further generalized.

The body 110 may include a capacitance formation portion Ac disposed in the body 110 and including the first and second internal electrodes 121 and 122 alternately disposed with the dielectric layer 111 interposed therebetween, and a first cover portion 112 and a second cover portion 113 disposed on both surfaces of capacitance formation portion Ac opposing each other in the first direction. The cover portions 112 and 113 may be configured similarly to the dielectric layer 111, other than the configuration in which the cover portions 112 and 113 do not include an internal electrode.

An average thickness of the cover portions 112 and 113 may not be limited to any particular example. The average thickness of the cover portions 112 and 113 may be, for example, 40 µm or lower, 30 µm or lower, 20 µm or lower. The average thickness of the cover portions 112 and 113 may be, for example, 5 µm or greater, 10 µm or greater. Here, the average thickness of the cover portions 112 and 113 may indicate the average thickness of each of the first cover portion 112 and the second cover portion 113.

The average thickness of the cover portions 112 and 113 may indicate the average size in the first direction of the cover portions 112 and 113, and may be an average value of the first direction size measured at five points at an equal distance in the second direction in a cross-section in the first direction and second direction passing through a center of the body 110 in the third direction.

The first external electrodes 131 and 133 may be disposed on at least one of the first surface, second surface, fifth and sixth surfaces 1, 2, 5, and 6, and may be connected to the first internal electrode 121. For example, a pair of the first external electrodes 131 and 133 may be disposed on the fifth and sixth surfaces 5 and 6, respectively, and may be connected to the first lead portions 121b and 121c. A pair of the first external electrodes 131 and 133 may be disposed to extend to a portion of the first and second surfaces 1 and 2. However, an embodiment thereof is not limited thereto, and, although not illustrated, the first external electrode 131 may be disposed only on one of the fifth and sixth surfaces 5 and 6, or the first external electrode 131 disposed on the fifth surface 5 and the first external electrode 133 disposed on the sixth surface 6 may be connected to each other on the first surface 1 and/or the second surface 2.

The second external electrodes 132 and 134 may be disposed on at least one of the first surface, the second surface, the third and fourth surfaces 1, 2, 3 and 4, and may be connected to the second internal electrode 122. For example, a pair of second external electrodes 132 and 134 may be disposed on the third and fourth surfaces 3 and 4, respectively, and connected to the second lead portions 122b and 122c. A pair of the second external electrodes 132 and 134 may be disposed to extend to a portion of the first and second surfaces 1 and 2.

The types of the external electrodes 131, 132, 133, and 134 are not limited to any particular example, and may have a multilayer structure. The external electrodes 131, 132, 133, and 134 may include, for example, a base electrode layer in contact with the internal electrodes 121 and 122, and a plating layer disposed on the base electrode layer. The base electrode layer may include, for example, one or more of a sintered electrode layer, a conductive resin layer, and a thin-film electrode layer.

The sintered electrode layer may include a metal and glass. The metal included in the sintered electrode layer may include one or more of Cu, Ni, Pd, Pt, Au, Ag, Pb, and alloys thereof, but an embodiment thereof is not limited thereto. The glass included in the sintered electrode layer may include one or more oxides of Ba, Ca, Zn, Al, B and Si, but an embodiment thereof is not limited thereto.

The conductive resin layer may include metal particles and resin. The second conductive metal included in the conductive resin layer may include one or more of spherical particles and flake-type particles. Here, spherical particles may include shapes not completely spherical, for example, shapes in which the length ratio (major axis/minor axis) between the major axis and the minor axis is 1.45 or higher. Flake-type particles may refer to particles having a flat and elongated shape, and are not limited to any particular example, and for example, a length ratio of the major axis between the minor axis (major axis/minor axis) may be 1.95 or more. The metal particles included in the conductive resin layer may include, for example, one or more of Cu, Ni, Pd, Pt, Au, Ag, Pb, Sn and alloys thereof. The resin included in the conductive resin layer may include, for example, one or more of epoxy resin, acrylic resin and ethyl cellulose.

The conductive resin layer may be formed of a conductive polymer. The conductive polymer may include, for example, one or more of polypyrrole, polyaniline, polythiophene, and PEDOT:PSS.

The thin-film electrode layer may be formed, for example, by using an electrolytic plating method, an electroless plating method, an atomic layer deposition (ALD) method, a chemical vapor deposition (CVD) method, and/or a sputtering method.

The base electrode layer may be, for example, the sintered electrode layer, or may have a form in which the sintered electrode layer and the conductive resin layer are laminated in order, or may have a form in which the thin-film electrode layer and the sintered electrode layer are laminated in order.

The plating layer may include, for example, Ni, Sn, Pd, and/or an alloy thereof, and may include a plurality of layers. The plating layer may be, for example, a Ni plating layer or a Sn plating layer, and may be formed in a form in which the Ni plating layer and the Sn plating layer are formed in order. Also, the plating layer may include a plurality of Ni plating layers and/or a plurality of Sn plating layers.

In the drawing, the multilayer electronic component 100a may have a pair of first external electrodes 131 and 133 and a pair of second external electrodes 132 and 134, but an embodiment thereof is not limited thereto, and the number of the external electrodes 131, 132, 133, and 134 or the shape thereof may be varied depending on the shape of the internal electrodes 121 and 122 or other purposes.

The multilayer electronic component 100a according to the first embodiment may include first connection electrodes 141 and 143 penetrating the dielectric layer 111 and connecting two first internal electrodes 121 adjacent to each other in the first direction. The first connection electrodes 141 and 143 may connect first internal electrodes 121 adjacent to each other among the plurality of first internal electrodes 121.

For example, the first connection electrodes 141 and 143 may penetrate a region adjacent to the fifth and sixth surfaces 5 and 6 of the dielectric layer 111 and connecting first lead portions 121b and 121c adjacent to each other among the plurality of first lead portions 121b and 121c. For example, the first connection electrodes 141 and 143 may penetrate a region spaced apart from the fifth and sixth surfaces 5 and 6 and the second internal electrode 122 in the third direction (hereinafter, referred to as a first margin region) .

Generally, connection between the internal electrode and the external electrode may be disconnected due to shrinkage of the internal electrode during the sintering process or cracks occurring in the body. As the number of internal electrodes disconnected from the external electrode may increase among the plurality of internal electrodes, capacitance of the multilayer electronic component may decrease.

According to the first embodiment, even when a portion of the first internal electrodes 121 is shrunk by the sintering process and contact with the first external electrodes 131 and 133 is disconnected at the fifth surface 5 or the sixth surface 6, the first internal electrode may be electrically connected to the first external electrodes 131 and 133 through the first connection electrodes 141 and 143 and the first internal electrode 121 of another layer. Accordingly, capacitance of the multilayer electronic component 100a may be prevented from decreasing.

Also, the first connection electrodes 141 and 143 may be disposed in the first margin region, such that the phenomenon in which the first margin region is recessed due to a step difference formed by a difference in the number of laminations of the internal electrodes 121 and 122 between the first margin region and the capacitance formation portion Ac or due to external stress may be prevented.

According to the first embodiment, the first connection electrodes 141 and 143 may have a plurality of first via electrodes 141a, 141b, 143a, and 143b shifted from each other in a direction perpendicular to the first direction and laminated in the first direction.

Referring to FIG. 7A, the plurality of first via electrodes 141a and 141b shifted from each other in a direction perpendicular to the first direction may indicate that, in the cross-section in the first direction and third direction of the body 110, a virtual line L11a connecting 1/2 points of the upper surface and the lower surface of the first via electrode 141a and a virtual line L11b connecting 1/2 points of the upper surface and the lower surface of another adjacent first via electrode 141b may not coincide with each other. For example, the virtual line L11a connecting 1/2 points of the upper surface and the lower surface of the first via electrode 141a and the virtual line L11b connecting 1/2 points of the upper surface and the lower surface of another adjacent first via electrode 141b may range from greater than 0 to equal to or less than 50% of the width of the upper surface of the first via electrode 141b. FIG. 7B shows an example having a maximum shift between the plurality of first via electrodes 141a and 141b according to one embodiment, in which the shift (i.e., the distance) between the virtual line L11a and the virtual line L11b may be 50% of the width of the upper surface of the first via electrode 141b.

The first connection electrodes 141 and 143 may be formed, for example, in the process of laminating two dielectric sheets having vias formed therein. In this case, the vias formed in each dielectric sheet may not be perfectly aligned with each other, and accordingly, the two laminated first via electrodes 141a, 141b, 143a, and 143b may be shifted from each other in a direction perpendicular to the first direction. Differently from a general method in which a hole may be formed in the body after sintering using a drill or puncher to form the first connection electrode, in the first embodiment, the first connection electrodes 141 and 143 may be formed by laminating the dielectric sheet on which the via is formed, thereby preventing the issue of cracks occurring in the body 110 due to the drilling process.

In an embodiment, a plurality of the first connection electrodes 141 and 143 penetrating the same dielectric layer 111 may be disposed. The plurality of first connection electrodes 141 and 143 penetrating the same dielectric layer 111 may be arranged in the second and third directions. Here, the configuration in which a plurality of the first connection electrodes 141 and 143 penetrating the same dielectric layer 111 are disposed may indicate that a plurality of the first connection electrode 141 and a plurality of the first connection electrode 143 are disposed.

For example, a plurality of the first connection electrodes 141 and 143 disposed on the same level may be disposed, and the plurality of first connection electrodes 141 and 143 disposed on the same level may be arranged in the second and third directions.

The number of first connection electrodes 141 and 143 penetrating the same dielectric layer 111 is not limited to any particular example, and may be varied depending on the size of the multilayer electronic component 100a or the size of the first connection electrodes 141 and 143. For example, the number of first connection electrodes 141 and 143 penetrating the same dielectric layer 111 may be 5 or more and 300 or less. Here, the number of first connection electrodes 141 and 143 may indicate the number of the first connection electrodes 141 and the number of the first connection electrodes 143.

In an embodiment, widths of the upper surfaces of the first via electrodes 141a, 141b, 143a, and 143b may be greater than widths of the lower surfaces of the first via electrodes 141a, 141b, 143a, and 143b, respectively. As described below, the via formed in the dielectric sheet may be formed, for example, by irradiating the dielectric sheet with a laser. In this case, the energy of the laser light may decrease from one surface of the dielectric sheet to which the laser is irradiated to the other surface. Accordingly, the widths of the first via electrodes 141a, 141b, 143a, and 143b may gradually decrease from the upper surfaces of the first via electrodes 141a, 141b, 143a, and 143b toward the lower surfaces of the first via electrodes 141a, 141b, 143a, and 143b.

In the drawing, the cross-section of the first via electrodes 141a, 141b, 143a, and 143b may have a trapezoidal shape, but an embodiment thereof is not limited thereto, and by controlling the irradiation conditions of the laser, the cross-section of the first via electrodes 141a, 141b, 143a, and 143b may have various shapes, and the sidewall of the first via electrodes 141a, 141b, 143a, and 143b may have a curved surface.

Maximum widths of the first via electrodes 141a, 141b, 143a, and 143b may be varied depending on the size of the multilayer electronic component 100a or the thickness of the dielectric layer 111. The maximum widths of the first via electrodes 141a, 141b, 143a, and 143b is not limited to any particular example, and may be 0.03 µm to 10 µm.

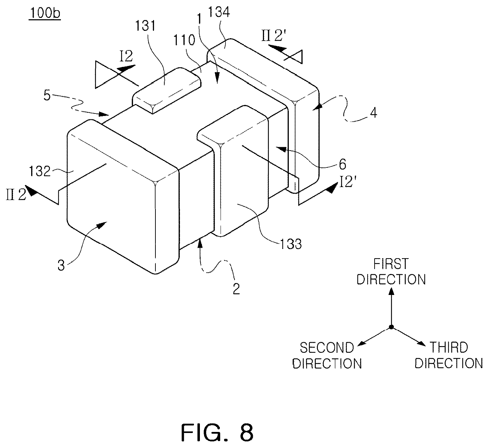

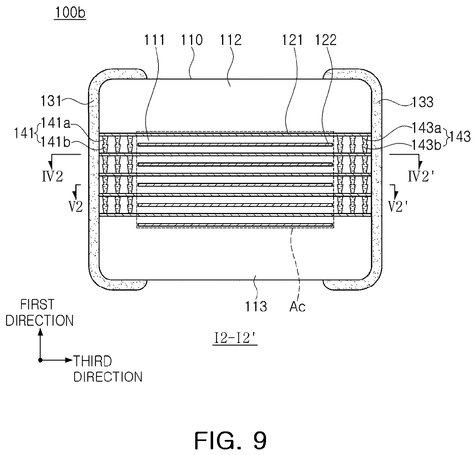

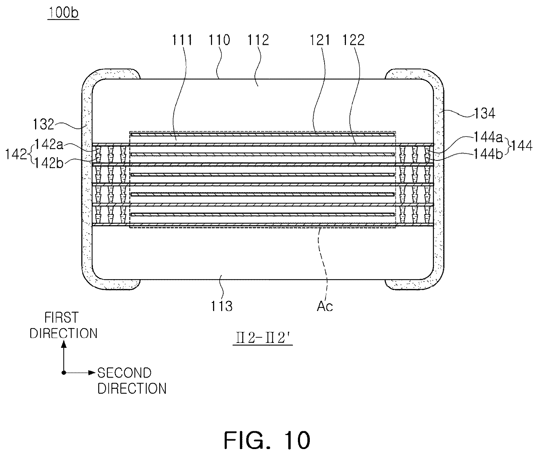

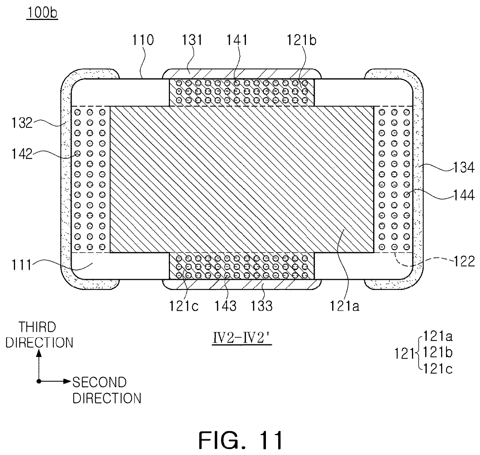

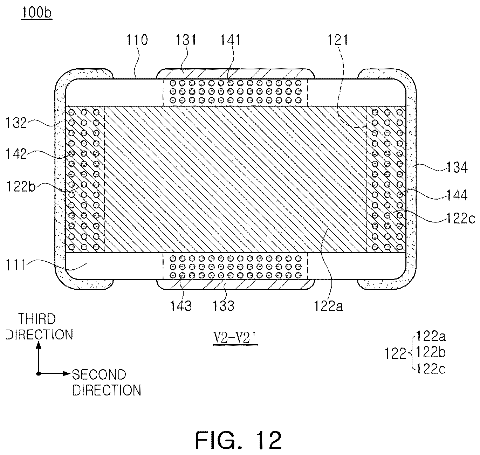

FIG. 8 is a perspective diagram illustrating a multilayer electronic component according to a first modified example of a first embodiment of the present disclosure. FIG. 9 is a cross-sectional diagram taken along line I2-I2' in FIG. 8. FIG. 10 is a cross-sectional diagram taken along line II2-II2' in FIG. 8. FIG. 11 is a cross-sectional diagram taken along line IV2-IV2' in FIG. 9. FIG. 12 is a cross-sectional diagram taken along line V2-V2' in FIG. 9.

Hereinafter, a multilayer electronic component 100b according to a first modified example of the first embodiment will be described with reference to FIGS. 8 to 12. The same/similar reference numerals are used for the components of the multilayer electronic component 100a described in FIGS. 1 to 7, and overlapping descriptions will not be provided.

The multilayer electronic component 100b may include a second connection electrode 142 and 144 penetrating the dielectric layer 111 and connecting two second internal electrodes 122 adjacent to each other in the first direction. The second connection electrode 142 and 144 may connect second internal electrodes 122 adjacent to each other among the plurality of second internal electrodes 122 to each other.

For example, the second connection electrodes 142 and 144 may penetrate a region of the dielectric layer 111 adjacent to the third surface and the fourth surface 3 and 4 and may connect second lead portions 122b and 122c adjacent to each other among the plurality of second lead portions 122b and 122c to each other. For example, the second connection electrodes 142 and 144 may penetrate the region (hereinafter referred to as the second margin region) in which the third and fourth surfaces 3 and 4 and the first internal electrode 121 are spaced apart from each other in the second direction.

The second connection electrodes 142 and 144 may have a form in which the plurality of second via electrodes 142a, 142b, 144a, and 144b shifted from each other in a direction perpendicular to the first direction are laminated in the first direction.

As described above, the configuration in which the plurality of second via electrodes 142a, 142b, 144a, and 144b are shifted from each other in a direction perpendicular to the first direction may indicate that, in the cross sections of the first and second directions of the body 110, a virtual line connecting 1/2 points of the upper surface and the lower surface of the second via electrode 142a, 144a and a virtual line connecting 1/2 points of the upper surface and the lower surface of the adjacent other second via electrode 142b and 144b may not coincide with each other.

According to the first modified example of the first embodiment, mechanical strength and electrical properties of the multilayer electronic component 100b may be more effectively improved by further including the first connection electrode 142 and 144 and the second connection electrode 142 and 144.

In an embodiment, a plurality of the second connection electrodes 142 and 144 penetrating the same dielectric layer 111 may be disposed. The plurality of second connection electrodes 142 and 144 penetrating the same dielectric layer 111 may be arranged in the second and third directions.

For example, a plurality of the second connection electrodes 142 and 144 disposed on the same level may be disposed, and the plurality of second connection electrodes 142 and 144 disposed on the same level may be arranged in the second and third directions.

The number of second connection electrodes 142 and 144 penetrating the same dielectric layer 111 is not limited to any particular example and may be varied depending on the size of the multilayer electronic component 100b or the size of the second connection electrodes 142 and 144. For example, the number of second connection electrodes 142 and 144 penetrating the same dielectric layer 111 may be 5 or more and 1000 or less. Here, the number of second connection electrodes 142 and 144 may indicate the number of the second connection electrodes 142 and the number of the second connection electrodes 144.

Hereinafter, a detailed description of the second connection electrodes 142 and 144 will not be provided. However, the second connection electrodes 142 and 144 may have a configuration similar to that of the first connection electrodes 141 and 143, other than the configuration in which the first connection electrodes 141 and 143 are connected to the first internal electrode 121, and the second connection electrodes 142 and 144 are connected to the second internal electrode 122. Accordingly, the description of the first connection electrodes 141 and 143 described above may be applied to the second connection electrodes 142 and 144, unless otherwise indicated.

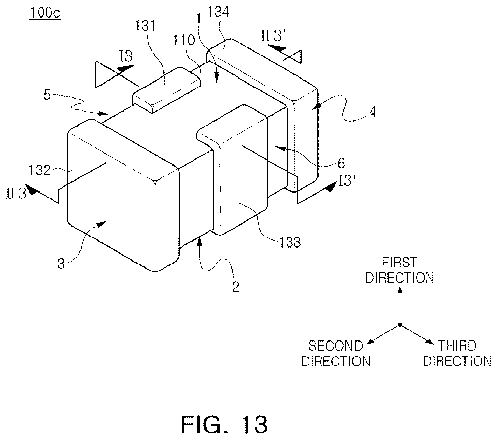

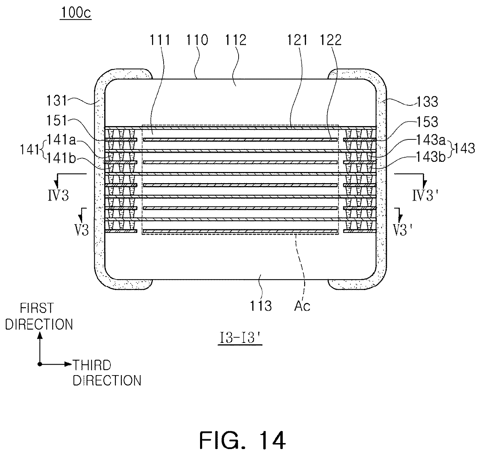

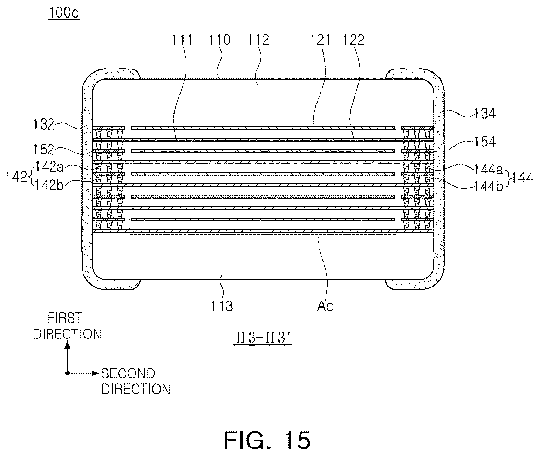

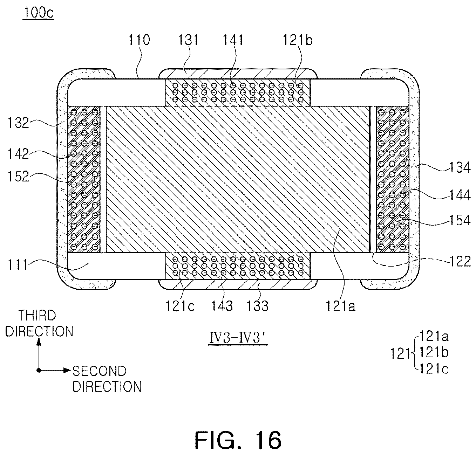

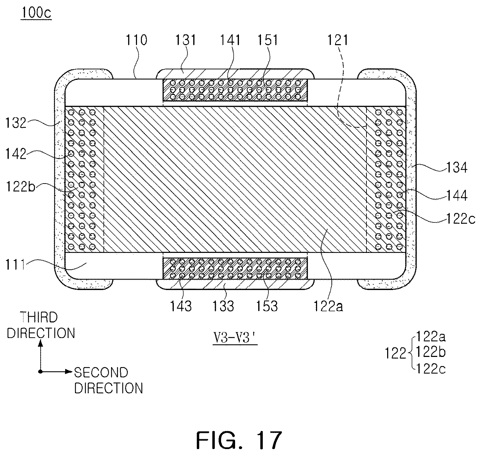

FIG. 13 is a perspective diagram illustrating a multilayer electronic component according to a second modified example of a first embodiment of the present disclosure. FIG. 14 is a cross-sectional diagram taken along line I3-I3' in FIG. 13. FIG. 15 is a cross-sectional diagram taken along line II3-II3' in FIG. 13. FIG. 16 is a cross-sectional diagram taken along line IV3-IV3' in FIG. 14. FIG. 17 is a cross-sectional diagram taken along line V3-V3' in FIG. 14.

Hereinafter, a multilayer electronic component 100c according to a second modified example of the first embodiment will be described with reference to FIGS. 13 to 17. The same/similar reference numerals are used for the components of the multilayer electronic components 100a and 100b described in FIGS. 1 to 12, and overlapping descriptions will not be provided.

The multilayer electronic component 100c may include a first auxiliary electrode 151 and 153 spaced apart from the second internal electrode 122 in the third direction, and disposed between two first via electrodes 141a, 141b, 143a, and 143b adjacent to each other among the plurality of first via electrodes 141a, 141b, 143a, and 143b.

A pair of first auxiliary electrodes 151 and 153 may be connected to the first external electrodes 131 and 133 on the fifth and sixth surfaces 5 and 6, respectively. However, an embodiment thereof is not limited thereto, and, the first auxiliary electrodes 151 and 153 may be spaced apart from the fifth and sixth surfaces 5 and 6.

The first auxiliary electrode 151 exposed to the fifth surface 5 may be connected to a plurality of first connection electrodes 141 penetrating the same dielectric layer 111, and the first auxiliary electrode 153 exposed to the sixth surface 6 may be connected to a plurality of first connection electrodes 143 penetrating the same dielectric layer.

By disposing the first auxiliary electrodes 151 and 153, the step difference caused by the difference in the number of laminates between the first margin region and capacitance formation portion Ac may be suppressed, and accordingly, the phenomenon in which the first margin region is recessed may be suppressed. Also, by appropriately disposing the first auxiliary electrodes 151 and 153, even when the first via electrodes 141a, 141b, 143a, and 143b included in the first connection electrodes 141 and 143 are overly misaligned, electrical connection between the adjacent first internal electrodes 121 may be assured.

The metal included in the first auxiliary electrodes 151 and 153 may be one or more of Ni, Cu, Pd, Ag, Au, Pt, Sn, W, Ti, and alloys thereof. The first auxiliary electrode 151 and 153 may include the same metal as that of the internal electrodes 121 and 122, but an embodiment thereof is not limited thereto.

Meanwhile, to prevent short circuit due to contact between the second internal electrode 122 and the first auxiliary electrode 151 and 153 to which voltages of different polarities are applied, the distance between the second internal electrode 122 and the first auxiliary electrode 151 and 153 may be 10% to 90% of the distance between the second internal electrode 122 and the fifth surface 5 or the sixth surface 6.

The multilayer electronic component 100c may include the second auxiliary electrode 152 and 154 spaced apart from the first internal electrode 121 in the second direction and disposed between two second via electrodes 142a, 142b, 144a, and 144b adjacent to each other among the plurality of second via electrodes 142a, 142b, 144a, and 144b.

A pair of second auxiliary electrodes 152 and 154 may be connected to second external electrodes 132 and 134 on the third and fourth surfaces 3 and 4, respectively. However, an embodiment thereof is not limited thereto, and, the second auxiliary electrodes 152 and 154 may be spaced apart from the third and fourth surfaces 3 and 4.

The second auxiliary electrode 152 exposed to the third surface 3 may be connected to a plurality of second connection electrodes 142 penetrating the same dielectric layer 111, and the second auxiliary electrode 154 exposed to the fourth surface 4 may be connected to a plurality of second connection electrodes 144 penetrating the same dielectric layer.

By disposing the second auxiliary electrodes 152 and 154, a step difference formed by the difference in the number of laminates between the second margin region and the capacitance formation portion Ac may be suppressed, and accordingly, the phenomenon in which the second margin region is recessed may be suppressed. Also, by appropriately disposing the second auxiliary electrodes 152 and 154, even when the second via electrodes 142a, 142b, 144a, and 144b included in the second connection electrodes 142 and 144 are overly misaligned, electrical connection between the adjacent second internal electrodes 122 may be assured.

Meanwhile, to prevent a short circuit due to contact between the first internal electrode 121 and the second auxiliary electrode 152 and 154 to which voltages of different polarities are applied, the distance between the first internal electrode 121 and the second auxiliary electrode 152 and 154 may be 10% to 90% of the distance between the first internal electrode 121 and the third surface 3 or the fourth surface 4 preferably.

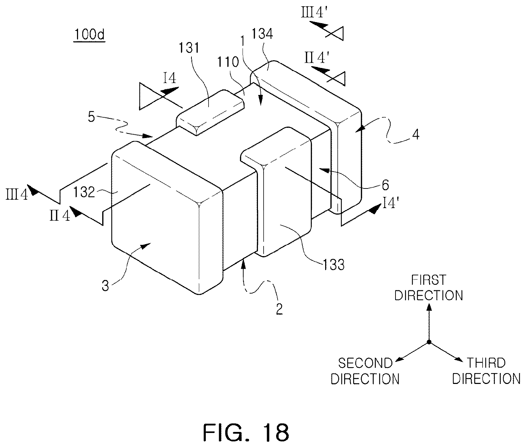

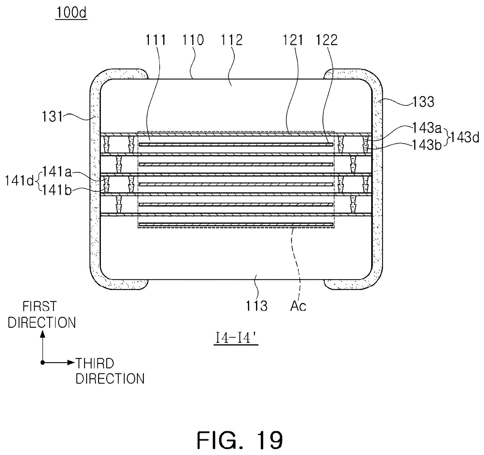

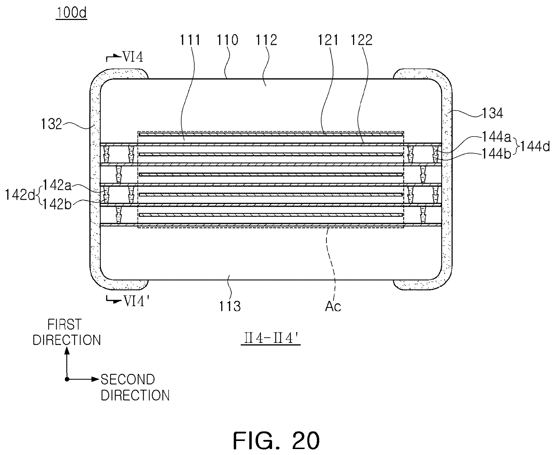

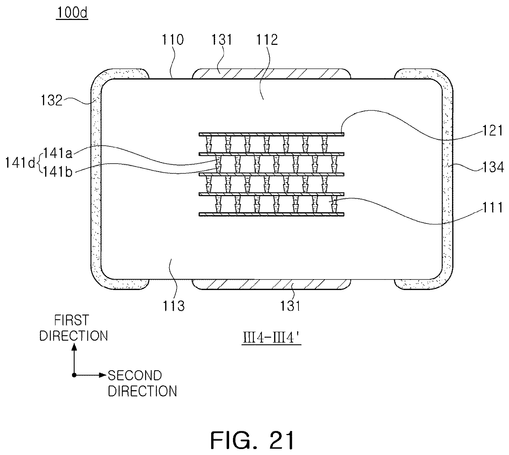

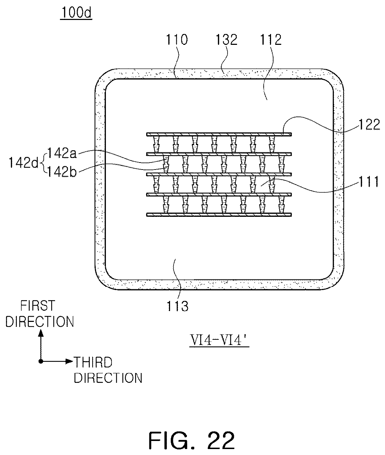

FIG. 18 is a perspective diagram illustrating a multilayer electronic component according to a third modified example of a first embodiment of the present disclosure. FIG. 19 is a cross-sectional diagram taken along line I4-I4' in FIG. 18. FIG. 20 is a cross-sectional diagram taken along line II4-II4' in FIG. 18. FIG. 21 is a cross-sectional diagram taken along line III4-III4' in FIG. 18. FIG. 22 is a cross-sectional diagram taken along line V14-VI4' in FIG. 20.

Hereinafter, a multilayer electronic component 100d according to a third modified example of the first embodiment will be described with reference to FIGS. 18 to 22. The same/similar reference numerals are used for the components of the multilayer electronic components 100a and 100b described in FIGS. 1 to 12, and overlapping descriptions will not be provided.

According to the third modified example of the first embodiment, two first connection electrodes 141d and 143d adjacent to each other in the first direction may be shifted from each other in a direction perpendicular to the first direction. The two first connection electrodes 141d and 143d adjacent to each other in the first direction may indicate two first connection electrodes 141d and 143d disposed on different levels and in contact with the same first internal electrode 121.

Here, the configuration in which the two adjacent first connection electrodes 141d and 143d are shifted from each other may indicate that, in the cross-section in the first direction and second direction of the body 110 or the cross-section in first direction and third direction of the body 110, a virtual line connecting 1/2 points of the upper surface and the lower surface of one first connection electrode 141d and 143d and a virtual line connecting 1/2 points of the upper surface and the lower surface of the other first connection electrode 141d and 143d may not coincide with each other.

According to the third modified example of the first embodiment, the two first connection electrodes 141d and 143d adjacent to each other in the first direction may be shifted from each other, such that the first connection electrodes 141d and 143d may be dispersed in the first margin region. Accordingly, mechanical strength of the multilayer electronic component 100d may be effectively improved regardless of the number of first connection electrodes 141d and 143d.

Also, the two second connection electrodes 142d and 144d adjacent to each other in the first direction may be shifted from each other in a direction perpendicular to the first direction. The two second connection electrodes 142d and 144d adjacent to each other in the first direction may indicate the two second connection electrodes 142d and 144d disposed on different levels and in contact with the same second internal electrode 122.

Hereinafter, the detailed description of the second connection electrodes 142d and 144d will not be provided. The second connection electrodes 142d and 144d may have a configuration similar to that of the first connection electrodes 141d and 143d. Accordingly, the description of the first connection electrodes 141d and 143d described above may be applied to the second connection electrodes 142d and 144d unless otherwise indicated.

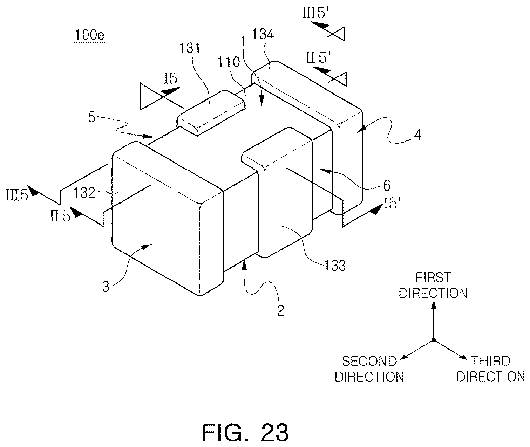

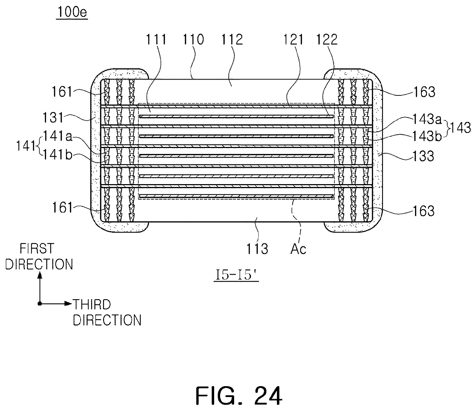

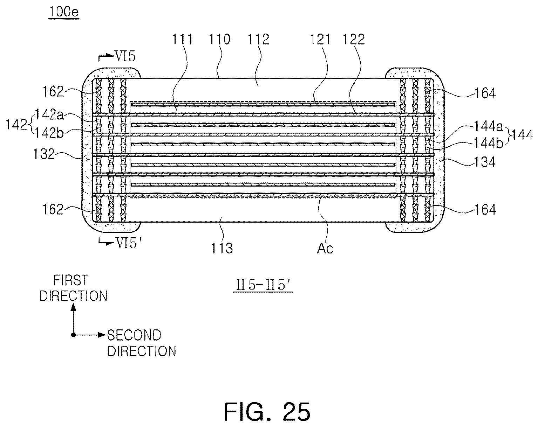

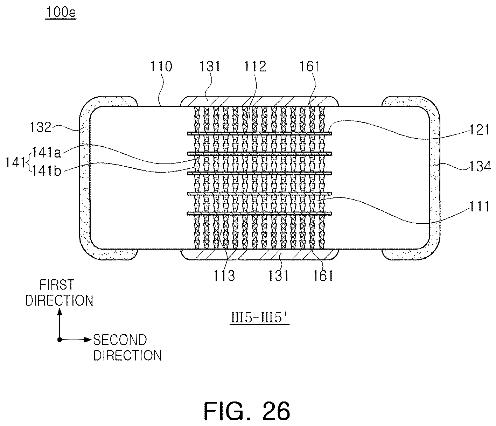

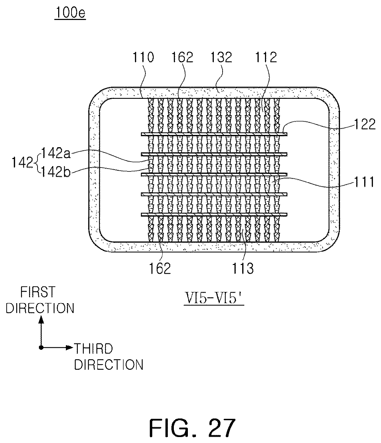

FIG. 23 is a perspective diagram illustrating a multilayer electronic component according to a fourth modified example of a first embodiment of the present disclosure. FIG. 24 is a cross-sectional diagram taken along line I5-I5' in FIG. 23. FIG. 25 is a cross-sectional diagram taken along line II5-II5' in FIG. 23. FIG. 26 is a cross-sectional diagram taken along line III5-III5' in FIG. 23. FIG. 27 is a cross-sectional diagram taken along line V15-VI5' in FIG. 25.

Hereinafter, a multilayer electronic component 100e according to a fourth modified example of the first embodiment will be described with reference to FIGS. 23 to 27. The same/similar reference numerals are used for the components of the multilayer electronic components 100a and 100b described in FIGS. 1 to 12, and overlapping descriptions will not be provided.

The first external electrodes 131 and 133 may be disposed on at least one surface among the first and second surfaces 1 and 2. For example, a pair of the first external electrodes 131 and 133 may be disposed on the fifth and sixth surfaces 5 and 6, respectively, and may extend to at least one surface among the first and second surfaces 1 and 2.

The second external electrodes 132 and 134 may be disposed on at least one surface among the first and second surfaces 1 and 2. For example, a pair of the second external electrodes 132 and 134 may be disposed on the third and fourth surfaces 3 and 4, respectively, and may extend to at least one surface of the first and second surfaces 1 and 2.

The multilayer electronic component 100e may include first contact electrodes 161 and 163 penetrating the cover portions 112 and 113 and connecting the first internal electrode 121 disposed in the outermost region with respect to the first direction to the first external electrodes 131 and 133.

The first contact electrodes 161 and 163 may be formed by laminating two or more layers of sheets for forming the cover portion in which vias are formed. Accordingly, the first contact electrodes 161 and 163 may have a form in which a plurality of via electrodes are laminated. The number of via electrodes forming the first contact electrodes 161 and 163 is not limited to any particular example, and may be varied depending on the number of sheets for forming the cover portion. Also, a plurality of the first contact electrodes 161 and 163 may be disposed in the first and second cover portions 112 and 113, respectively.

The first contact electrodes 161 and 163 may increase a current path of the multilayer electronic component 100e by connecting the region between the first internal electrode 121 disposed in the outermost region with respect to the first direction to the region of the first external electrodes 131 and 133 extending to the first surface 1 or the second surface 2, and accordingly, equivalent series resistance (ESR) of the multilayer electronic component 100e may be reduced.

The multilayer electronic component 100e may include the second contact electrodes 162 and 164 connecting the second internal electrode 122 disposed in the outermost region with respect to the first direction to the second external electrodes 132 and 134.

Similarly to the second connection electrode 142 and 144, the second contact electrodes 162 and 164 may be formed by laminating two or more layers of sheets for forming the cover portion in which the via is formed. Accordingly, the second contact electrodes 162 and 164 may have a form in which a plurality of via electrodes are laminated. The number of via electrodes forming the second contact electrodes 162 and 164 is not limited to any particular example and may be varied depending on the number of sheets for forming the cover portion. A plurality of the second contact electrodes 162 and 164 may be disposed in the first and second cover portions 112 and 113, respectively.

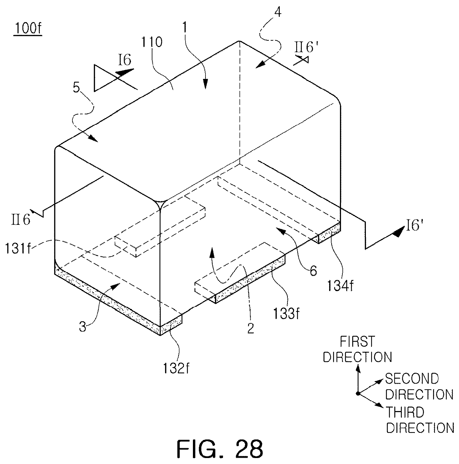

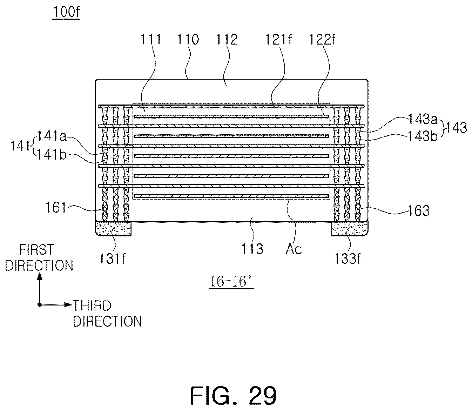

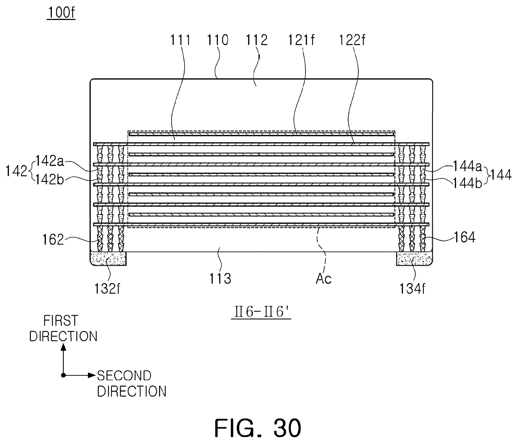

FIG. 28 is a perspective diagram illustrating a multilayer electronic component according to a fifth modified example of a first embodiment of the present disclosure. FIG. 29 is a cross-sectional diagram taken along line I6-I6' in FIG. 28. FIG. 30 is a cross-sectional diagram taken along line II6-II6' in FIG. 28.

Hereinafter, a multilayer electronic component 100f according to the fifth modified example of the first embodiment will be described with reference to FIGS. 28 to 30. The same/similar reference numerals are used for the components of the multilayer electronic component 100e described in FIGS. 23 to 27, and overlapping descriptions will not be provided.

The first external electrodes 131f and 133f may be disposed on the second surface 2 and may not be disposed on the first surface 1. For example, the pair of first external electrodes 131f and 133f may be spaced apart from each other in the third direction on the second surface 2. The first external electrodes 131f and 133f may not extend to the fifth and sixth surfaces 5 and 6, but an embodiment thereof is not limited thereto, and the first external electrodes 131f and 133f may extend to at least one of the fifth and sixth surfaces 5 and 6.

The second external electrode 132f and 134f may be disposed on the second surface 2 and may not be disposed on the first surface 1. For example, the pair of second external electrodes 132f and 134f may be spaced apart from each other in the second direction on the second surface 2. The second external electrode 132f and 134f may not extend from the third to sixth surfaces 3, 4, 5, and 6, but an embodiment thereof is not limited thereto, and the second external electrode 132f and 134f may extend from at least one surface of the third to sixth surfaces 3, 4, 5, and 6.

The multilayer electronic component 100f may include first contact electrodes 161 and 163 penetrating the cover portion 113 and connecting the first internal electrode 121f disposed in the outermost region with respect to the first direction to the first external electrodes 131f and 133f. The first contact electrodes 161 and 163 may be disposed in the second cover portion 113 and may not be disposed in the first cover portion 112.

The multilayer electronic component 100f may include second contact electrodes 162 and 164 penetrating the cover portion 113 and connecting the second internal electrode 122f disposed in the outermost region with respect to the first direction to the second external electrode 132f and 134f. The second contact electrodes 162 and 164 may be disposed in the second cover portion 113 and may not be disposed in the first cover portion 112.

Since the first contact electrodes 161 and 163 electrically connects the first internal electrode 121f to the first external electrodes 131f and 133f, and the second contact electrodes 162 and 164 electrically connects the second internal electrode 122f to the second external electrode 132f and 134f, the internal electrode 121f and 122f may not be exposed to the external surface of the body 110. That is, the internal electrodes 121f and 122f may be spaced apart from the third to sixth surfaces 3, 4, 5, and 6. Accordingly, moisture resistance reliability of the multilayer electronic component 100f may be prevented from being deteriorated.

Also, the external electrodes 131f, 132f may be disposed only on the second surface 2, thereby improving capacitance per unit volume and bending strength of the multilayer electronic component 100f.

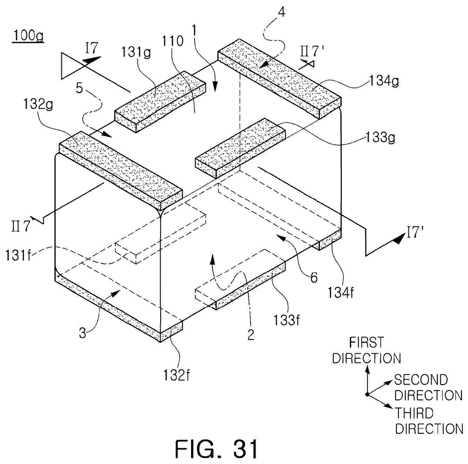

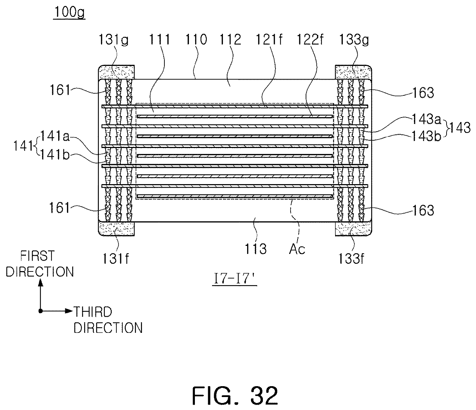

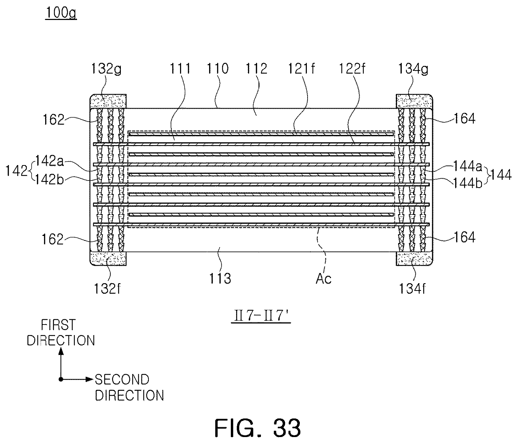

FIG. 31 is a perspective diagram illustrating a multilayer electronic component according to a sixth modified example of a first embodiment of the present disclosure. FIG. 32 is a cross-sectional diagram taken along line I7-I7' in FIG. 31. FIG. 33 is a cross-sectional diagram taken along line II7-II7' in FIG. 31.

Hereinafter, a multilayer electronic component 100g according to the sixth modified example of the first embodiment will be described with reference to FIGS. 31 to 33. The same/similar reference numerals are used for the components of the multilayer electronic component 100f described in FIGS. 28 to 30, and overlapping descriptions will not be provided.

The first external electrodes 131f, 133f, 131g, and 133g may be disposed on the first and second surfaces 1 and 2, respectively. For example, a pair of the first external electrodes 131f and 133f may be spaced apart from each other in the third direction on the second surface 2, and a pair of first external electrodes 131g and 133g may be spaced apart from each other in the third direction on the first surface 1.

The first external electrode 131g and 133g disposed on the first surface 1 and the first external electrodes 131f and 133f disposed on the second surface 2 may be spaced apart from each other. The first external electrodes 131f, 133f, 131g, and 133g may not extend to the fifth and sixth surfaces 5 and 6, but an embodiment thereof is not limited thereto, and the first external electrodes 131f, 133f, 131g, and 133g may extend to at least one surface among the fifth and sixth surfaces 5 and 6.

The second external electrodes 132f, 134f, 132g, and 134g may be disposed on the first and second surfaces 1 and 2, respectively. For example, a pair of second external electrodes 132f and 134f may be spaced apart from each other in the second direction on the second surface 2, and a pair of second external electrodes 132g and 134g may be spaced apart from each other in the second direction on the first surface 1.

The second external electrodes 132g and 134g disposed on the first surface 1 and the second external electrodes 132f and 134f disposed on the second surface 2 may be spaced apart from each other. The second external electrodes 132f, 134f, 132g, and 134g may not extend from the third to sixth surfaces 3, 4, 5, and 6, but an embodiment thereof is not limited thereto, and the second external electrodes 132f, 134f, 132g, and 134g may extend from at least one surface of the third to sixth surfaces 3, 4, 5, and 6.

The multilayer electronic component 100g may include first contact electrodes 161 and 163 penetrating the cover portions 112 and 113 and connecting the first internal electrode 121f disposed in the outermost region with respect to the first direction to the first external electrodes 131f, 133f, 131g, and 133g. The first contact electrodes 161 and 163 may be disposed in the first and second cover portions 112 and 113, respectively.

The multilayer electronic component 100e may include second contact electrodes 162 and 164 penetrating the cover portions 112 and 113 and connecting the second internal electrode 122f disposed in the outermost region with respect to the first direction to the second external electrodes 132f, 134f, 132g and 134g. The second contact electrodes 162 and 164 may be disposed in the first and second cover portions 112 and 113, respectively.

Since the first external electrodes 131f, 133f, 131g, and 133g and the second external electrodes 132f, 134f, 132g, and 134g are disposed on the first and second surfaces 1 and 2, respectively, the multilayer electronic component 100g may assure mounting convenience compared to the multilayer electronic component 100f.

### (Second embodiment)

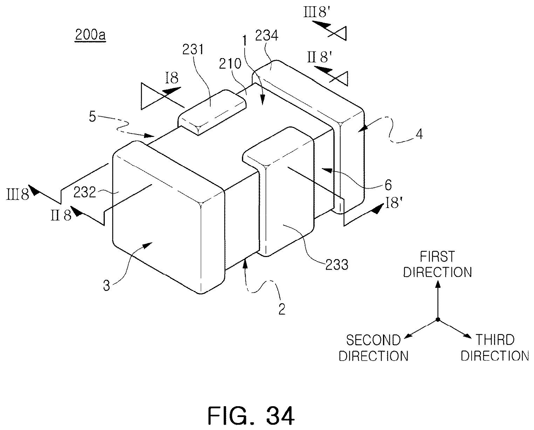

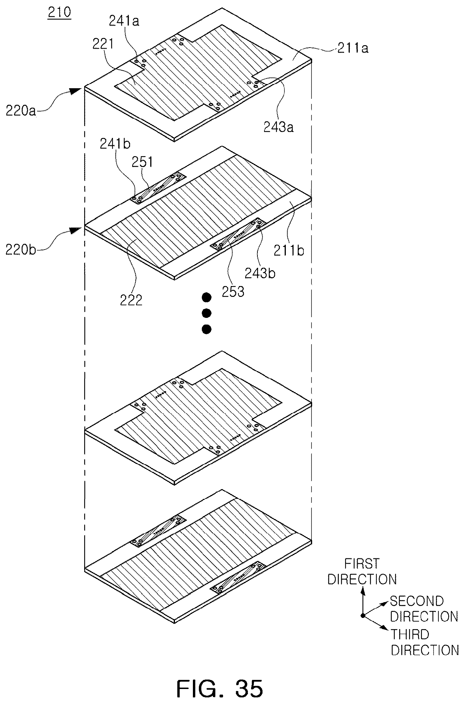

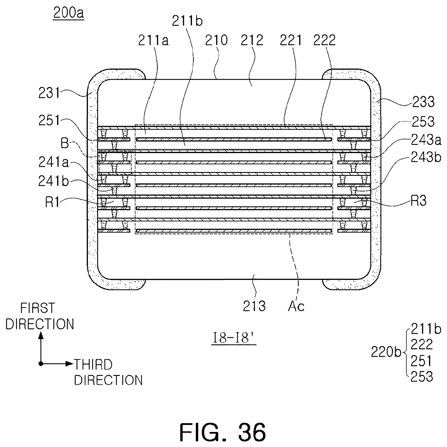

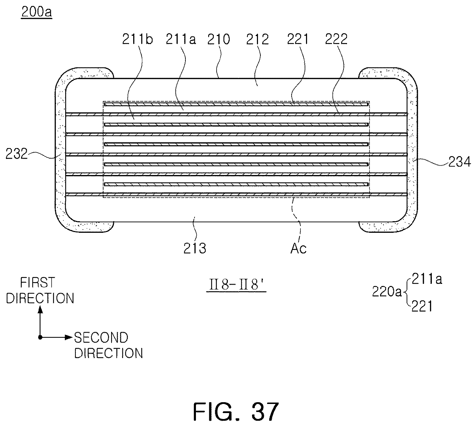

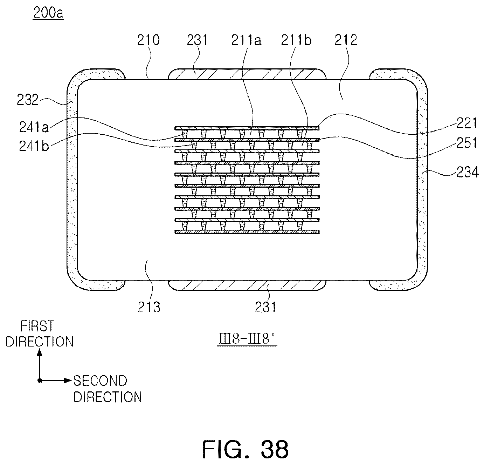

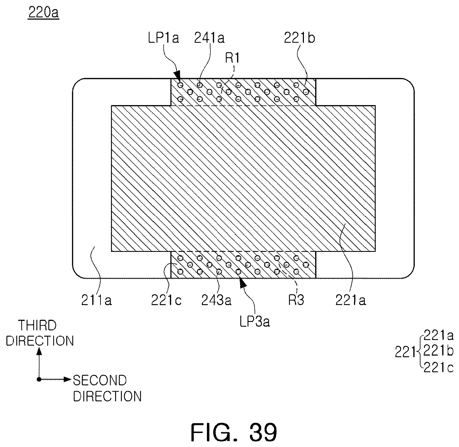

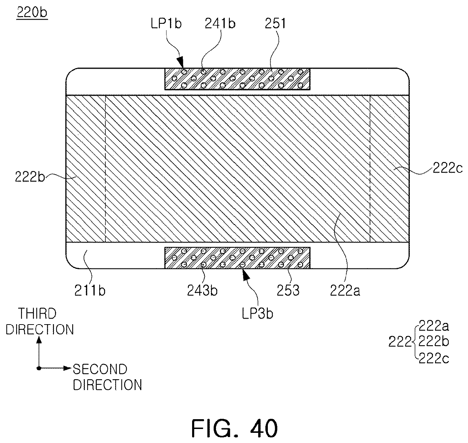

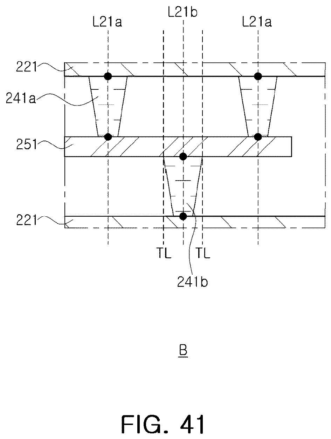

FIG. 34 is a perspective diagram illustrating a multilayer electronic component according to a second embodiment of the present disclosure. FIG. 35 is an exploded perspective diagram illustrating a portion of a body of a multilayer electronic component according to a second embodiment of the present disclosure. FIG. 36 is a cross-sectional diagram taken along line I8-I8' in FIG. 34. FIG. 37 is a cross-sectional diagram taken along line II8-II8' in FIG. 34. FIG. 38 is a cross-sectional diagram taken along line III8-III8' in FIG. 34. FIG. 39 is a plan diagram illustrating a first internal electrode layer of a multilayer electronic component according to a second embodiment of the present disclosure. FIG. 40 is a plan diagram illustrating a second internal electrode layer of a multilayer electronic component according to a second embodiment of the present disclosure. FIG. 41 is an enlarged cross-sectional diagram of FIG. 36.

Hereinafter, a multilayer electronic component 200a according to a second embodiment will be described with reference to FIGS. 34 to 41. The same/similar reference numerals are used for the components of the multilayer electronic component 100a described in FIGS. 1 to 7, and overlapping descriptions will not be provided.

A multilayer electronic component 200a according to a second embodiment may include a body 210, first external electrodes 231 and 233, second external electrodes 232 and 234, first via electrodes 241a and 243a, and second via electrodes 241b and 243b.

The body 210 may have first and second surfaces 1 and 2 opposing each other in the first direction, third and fourth surfaces 3 and 4 connected to the first and second surfaces 1 and 2 and opposing in the second direction, and fifth and sixth surfaces 5 and 6 connected to the first and second surfaces 1 and 2 and the third and fourth surfaces 3 and 4 and opposing each other in the third direction.

The body 210 may include a first internal electrode layer 220a and a second internal electrode layer 220b alternately disposed in the first direction. The body 210 may include a capacitance formation portion Ac disposed in the body 210, including first and second internal electrodes 221 and 222 alternately disposed with the first dielectric layer 211a or the second dielectric layer 211b therebetween and forming capacitance and cover portions 212 and 213 disposed on both surfaces opposing each other in the first direction of the capacitance formation portion Ac.

The first internal electrode layer 220a may include a first internal electrode 221 disposed on the first dielectric layer 211a and the first dielectric layer 211a. The second internal electrode layer 220b may include a second dielectric layer 211b, a second internal electrode 222 disposed on the second dielectric layer 211b and overlapping the first main portion 221a in the first direction, and first auxiliary electrodes 251 and 253 spaced apart from the second internal electrode 222 in the third direction.

The first internal electrode 221 may include a first main portion 221a overlapping the second internal electrode 222 in the first direction and first lead portions 221b and 221c extending from the first main portion 221a toward the fifth surface 5 or the sixth surface 6. The first internal electrode 221 may be exposed to the fifth and sixth surfaces 5 and 6 through a pair of first lead portions 221b and 221c. In an embodiment, a thickness of an end of the first lead portion 221b and 221c exposed to the fifth surface 5 or the sixth surface 6 may be greater than a thickness of a central portion of the first main portion 221a in the third direction.

The second internal electrode 222 may include a first internal electrode 221 overlapping the second main portion 222a in the first direction, and second lead portions 222b and 222c extending from the second main portion 222a toward the third surface 3 or the fourth surface 4. The second internal electrode 222 may be exposed to the third and fourth surfaces 3 and 4 through a pair of the second lead portions 222b and 222c.

The pair of first auxiliary electrodes 251 and 253 may be connected to the first external electrodes 231 and 233 on the fifth and sixth surfaces 5 and 6. However, an embodiment thereof is not limited thereto, and, the first auxiliary electrodes 251 and 253 may be spaced apart from the first external electrodes 231 and 233.

The first external electrodes 231 and 233 may be disposed on at least one surface among the first surface, second surface, fifth and sixth surfaces 1, 2, 5 and 6, and may be connected to the first internal electrode 221. For example, a pair of the first external electrodes 231 and 233 may be disposed on the fifth and sixth surfaces 5 and 6, respectively, and may be connected to the first lead portions 221b and 221c. A pair of the first external electrodes 231 and 233 may extend to a portion of the first and second surfaces 1 and 2.

The second external electrodes 232 and 234 may be disposed on at least one surface among the first surface, second surface, third and fourth surfaces 1, 2, 3 and 4, and may be connected to the second internal electrode 222. For example, a pair of second external electrodes 232 and 234 may be disposed on the third and fourth surfaces 3 and 4, respectively, and may be connected to the second lead portions 222b and 222c. A pair of the second external electrodes 232 and 234 may extend to a portion of the first and second surfaces 1 and 2.

The external electrodes 231, 232, 233, and 234 may include, for example, a base electrode layer in contact with the internal electrodes 221 and 222, and a plating layer disposed on the base electrode layer. The base electrode layer may include, for example, one or more of a firing electrode layer, a conductive resin layer, and a thin-film electrode layer.

A multilayer electronic component 200a according to a second embodiment may include a first via electrodes 241a and 243a penetrating a first dielectric layer 211a and connecting first lead portions 221b and 221c to first auxiliary electrodes 251 and 253, and second via electrodes 241b and 243b penetrating a second dielectric layer 211b and connecting the first lead portion 221b and 221c to the first auxiliary electrodes 251 and 253.

For example, the first via electrodes 241a and 243a may penetrate regions of the first dielectric layer 211a adjacent to the fifth and sixth surfaces 5 and 6, respectively, and connecting the first lead portion 221b and 221c to the first auxiliary electrodes 251 and 253. For example, the second via electrodes 241b and 243b may penetrate regions of the second dielectric layer 211b adjacent to the fifth and sixth surfaces 5 and 6, respectively, and connecting the first lead portions 221b and 221c to the first auxiliary electrodes 251 and 253.

According to the second embodiment, even when a portion of the first internal electrodes 221 is reduced by the sintering process and contact with the first external electrodes 231 and 233 on the fifth surface 5 or the sixth surface 6 is broken, the first internal electrodes may be electrically connected to the first external electrodes 231 and 233 through the first and second via electrodes 241a, 243a, 241b, and 243b and the first internal electrodes 221 of other layers. Accordingly, capacitance of the multilayer electronic component 200a may be prevented from being reduced.

According to the second embodiment, the first via electrodes 241a and 243a and the second via electrodes 241b and 243b may be shifted from each other in a direction perpendicular to the first direction. That is, the first via electrode 241a may be shifted from the second via electrode 241b in a direction perpendicular to the first direction, and the first via electrode 243a may be shifted from the second via electrode 243b in a direction perpendicular to the first direction.

Referring to FIG. 41, the configuration in which the first via electrode 241a and the second via electrode 241b are shifted from each other in a direction perpendicular to the first direction may indicate that, in the cross-section in the first and third directions of the body 210, a conceptual line L21a connecting 1/2 points of the upper surface and the lower surface of the first via electrode 241a and a conceptual line L21b connecting 1/2 points of the upper surface and the lower surface of the second via electrode 241b may not coincide with each other.

The first via electrodes 241a and 243a and the second via electrodes 241b and 243b may be shifted from each other, such that the via electrodes 241a, 243a, 241b, and 243b may be dispersed in the margin region in which the fifth and sixth surfaces 5 and 6 and the capacitance formation portion Ac are spaced apart from each other in the third direction. Accordingly, the phenomenon in which the margin region is recessed by a difference between the region in which via electrodes 241a, 243a, 241b, and 243b are disposed and the region in which via electrodes 241a, 243a, 241b, and 243b are not disposed in the margin region, or external stress may be prevented. Also, since the via electrodes 241a, 243a, 241b, and 243b are dispersed in the margin region, mechanical strength of the multilayer electronic component 200a may be effectively improved regardless of the number of via electrodes 241a, 243a, 241b, and 243b.

In an embodiment, the first via electrodes 241a and 243a and the second via electrodes 241b and 243b may not overlap each other in the first direction. When the first via electrodes 241a and 243a and the second via electrodes 241b and 243b are shifted from each other, the effect of improvement in mechanical strength of the multilayer electronic component 200a intended in the embodiment may be exhibited. However, when the first via electrodes 241a and 243a and the second via electrodes 241b and 243b are disposed so as not to overlap each other in the first direction, the effect of improvement in mechanical strength may be more significant.

Referring to FIG. 41, the configuration in which the first via electrode 241a does not overlap the second via electrode 241b in the first direction may indicate that the virtual line TL in the first direction in contact with the second via electrode 241b at a point at which a width of the second via electrode 241b is maximum may not intersect the first via electrode 241a.

In an embodiment, a plurality of the first via electrodes 241a and 243a penetrating the same first dielectric layer 211a may be disposed, and the plurality of first via electrodes 241a and 243a penetrating the same first dielectric layer 211a may be arranged in the second and third directions. For example, a plurality of the first via electrodes 241a and 243a disposed on the same level may be disposed, and the plurality of first via electrodes 241a and 243a disposed on the same level may be arranged in the second and third directions. Here, the configuration in which a plurality of the first via electrodes 241a and 243a penetrating the same first dielectric layer 211a are disposed may indicate that a plurality of the first via electrode 241a and a plurality of the first via electrode 243a are disposed.

Similarly, a plurality of the second via electrodes 241b and 243b penetrating the same second dielectric layer 211b may be disposed, and the plurality of second via electrodes 241b and 243b penetrating the same second dielectric layer 211b may be arranged in the second and third directions. For example, a plurality of the second via electrodes 241b and 243b disposed on the same level may be disposed, and the plurality of second via electrodes 241b and 243b disposed on the same level may be arranged in the second and third directions. Here, the configuration in which a plurality of the second via electrodes 241b and 243b penetrating the same second dielectric layer 211b are disposed may indicate that a plurality of the second via electrode 241b and a plurality of the second via electrode 243b are disposed.

Referring to FIGS. 39 and 40, the plurality of first via electrodes 241a and 243a penetrating the same first dielectric layer 211a may be arranged in a staggered manner with respect to the second and third directions and may form the first lattice patterns LP1a and LP3a, and the plurality of second via electrodes 241b and 243b penetrating the same second dielectric layer 211b may be arranged in a staggered manner with respect to the second and third directions and may form the second lattice patterns LP1b and LP3b.

The first lattice patterns LP1a and LP3a and the second lattice patterns LP1b and LP3b may be alternately disposed in the body 210 with the first internal electrode 221 or the first auxiliary electrodes 251 and 253 therebetween. The first lattice patterns LP1a and LP3a and the second lattice patterns LP1b and LP3b may include a plurality of via electrodes 241a, 243a, 241b, and 243b arranged in a zigzag pattern, and may not overlap each other in the first direction, such that the effect of improvement in mechanical strength may be significantly enhanced.

For example, the first dielectric layer 211a may include first regions R1 and R3 disposed between two first via electrodes 241a and 243a adjacent to each other in the second or third direction among a plurality of first via electrodes 241a and 243a, and a plurality of second via electrodes 241b and 243b may overlap the first regions.

In an embodiment, a width of the upper surface of the first via electrodes 241a and 243a may be greater than a width of the lower surface of the first via electrodes 241a and 243a, and a width of the upper surface of the second via electrodes 241b and 243b may be greater than a width of the lower surface of the second via electrodes 241b and 243b. The width of the first via electrodes 241a and 243a may gradually decrease from the upper surface of the first via electrodes 241a and 243a toward the lower surface of the first via electrodes 241a and 243a, and the width of the second via electrodes 241b and 243b may gradually decrease from the upper surface of the second via electrodes 241b and 243b toward the lower surface of the second via electrodes 241b and 243b, for example.

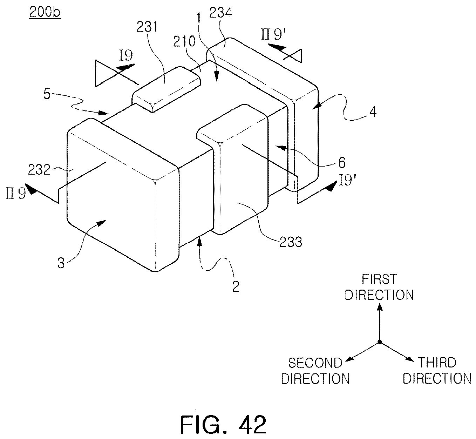

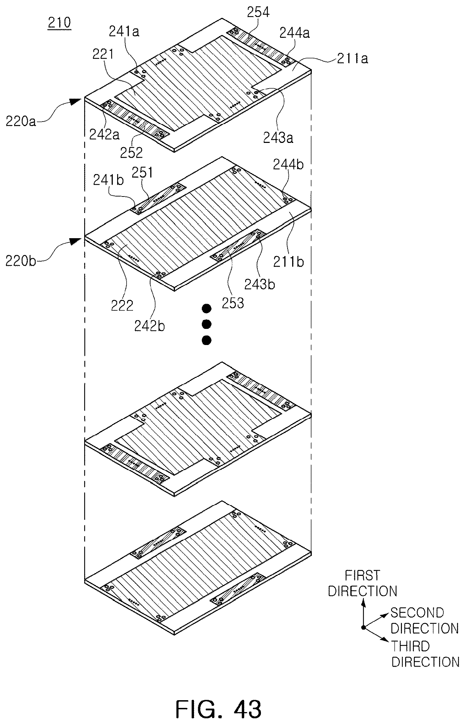

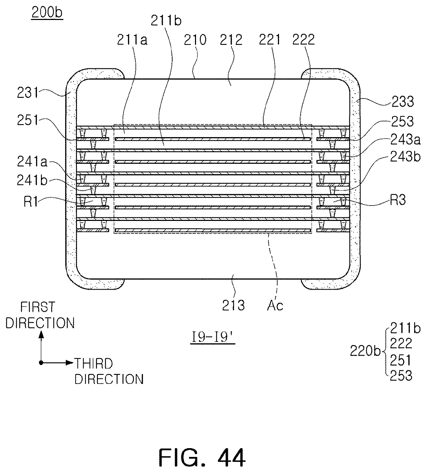

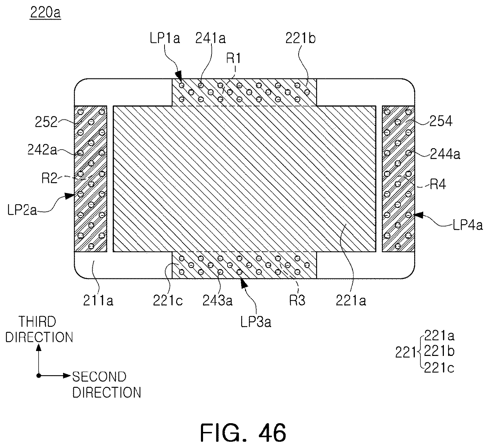

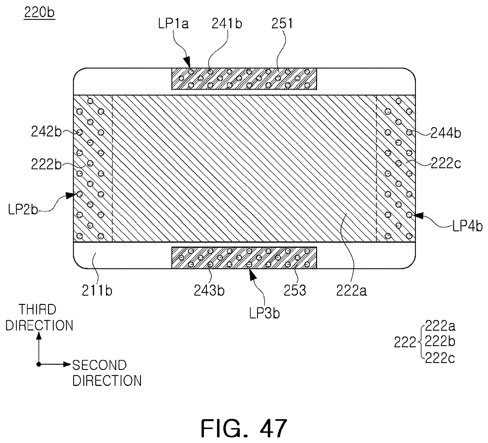

FIG. 42 is a perspective diagram illustrating a multilayer electronic component according to a first modified example of a second embodiment of the present disclosure. FIG. 43 is an exploded perspective diagram illustrating a portion of a body of a multilayer electronic component according to a first modified example of a second embodiment of the present disclosure. FIG. 44 is a cross-sectional diagram taken along line I9-I9' in FIG. 42. FIG. 37 is a cross-sectional diagram taken along line II9-II9' in FIG. 42. FIG. 46 is a plan diagram illustrating a first internal electrode layer of a multilayer electronic component according to a first modified example of a second embodiment of the present disclosure. FIG. 47 is a plan diagram illustrating a second internal electrode layer of a multilayer electronic component according to a first modified example of a second embodiment.

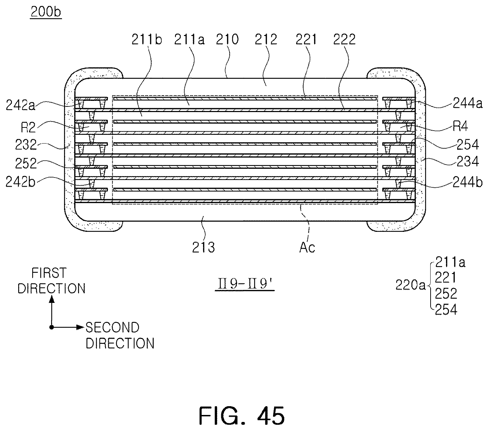

Hereinafter, a multilayer electronic component 200b according to a first modified example of the second embodiment will be described with reference to FIGS. 42 to 47. The same/similar reference numerals are used for the components of the multilayer electronic component 200a described in FIGS. 34 to 41, and overlapping descriptions will not be provided.

A body 210 of the multilayer electronic component 200b may include a first internal electrode layer 220a and a second internal electrode layer 220b alternately disposed in the first direction.

The first internal electrode layer 220a may include a first dielectric layer 211a, a first internal electrode 221 disposed on the first dielectric layer 211a, and a second auxiliary electrodes 252 and 254 spaced apart from the first internal electrode 221 in the second direction.

A pair of second auxiliary electrodes 252 and 254 may be connected to the second external electrodes 232 and 234 on the third and fourth surfaces 3 and 4. However, an embodiment thereof is not limited thereto, and, the second auxiliary electrodes 252 and 254 may be spaced apart from the second external electrodes 232 and 234.

The multilayer electronic component 200b may include third via electrodes 242a and 244a penetrating the first dielectric layer 211a and connecting the second lead portions 222b and 222c to the second auxiliary electrodes 252 and 254, and fourth via electrodes 242b and 244b penetrating the second dielectric layer 211b and connecting the second lead portions 222b and 222c to the second auxiliary electrodes 252 and 254.

For example, the third via electrodes 242a and 244a may penetrate a region of the first dielectric layer 211a adjacent to the third and fourth surfaces 3 and 4 and may connect the second lead portions 222b and 222c to the second auxiliary electrodes 252 and 254. For example, the fourth via electrodes 242b and 244b may penetrate a region of the second dielectric layer 211b adjacent to the third and fourth surfaces 3 and 4 and may connect the second lead portions 222b and 222c to the second auxiliary electrodes 252 and 254.

According to the second embodiment, the third via electrodes 242a and 244a and the fourth via electrodes 242b and 244b may be shifted from each other in a direction perpendicular to the first direction. In an embodiment, the third via electrodes 242a and 244a and the fourth via electrodes 242b and 244b may not overlap each other in the first direction.

According to the first modified example of the second embodiment, mechanical strength and electrical properties of the multilayer electronic component 200b may be effectively improved by including the first and second via electrodes 241a, 243a, 241b, and 243b and also the third and fourth via electrodes 242a, 244a, 242b and 244b.

In an embodiment, a plurality of the third via electrodes 242a and 244a penetrating the same first dielectric layer 211a may be disposed, and the plurality of third via electrodes 242a and 244a penetrating the same first dielectric layer 211a may be arranged in the second and third directions. For example, a plurality of third via electrodes 242a and 244a disposed on the same level may be disposed, and a plurality of third via electrodes 242a and 244a disposed on the same level may be arranged in the second and third directions. Here, the plurality of third via electrodes 242a and 244a penetrating the same first dielectric layer 211a may indicate that a plurality of third via electrodes 242a and a plurality of third via electrode 244a are disposed.

Similarly, a plurality of the fourth via electrodes 242b and 244b penetrating the same second dielectric layer 211b may be disposed, and the plurality of fourth via electrodes 242b and 244b penetrating the same second dielectric layer 211b may be arranged in the second and third directions. For example, a plurality of the fourth via electrodes 242b and 244b disposed on the same level may be disposed, and the plurality of fourth via electrodes 242b and 244b disposed on the same level may be arranged in the second and third directions. Here, the configuration in which a plurality of the fourth via electrodes 242b and 244b penetrating the same second dielectric layer 211b are disposed may indicate that a plurality of the fourth via electrode 242b and a plurality of the fourth via electrode 244b are disposed.

Referring to FIG. 46 and FIG. 47, a plurality of third via electrodes 242a and 244a penetrating the same first dielectric layer 211a may be arranged in a staggered manner with respect to the second and third directions and may form third lattice patterns LP2a, LP4a, and a plurality of fourth via electrodes 242b and 244b penetrating the same second dielectric layer 211b may be arranged in a staggered manner with respect to the second and third directions and may form fourth lattice patterns LP2b, LP4b.

The third lattice patterns LP2a, LP4a and the fourth lattice patterns LP2b, LP4b may be alternately disposed with respect to the second internal electrode 222 or the second auxiliary electrodes 252 and 254 in the body 210. The third lattice patterns LP2a, LP4a and the fourth lattice patterns LP2b, LP4b may include a plurality of via electrodes 242a, 244a, 242b and 244b arranged in a zigzag pattern, respectively, and the effect of improvement in mechanical strength may be significantly enhanced by not overlapping each other in the first direction.

For example, the first dielectric layer 211a may include a second region R2, R4 disposed between two third via electrodes 242a and 244a adjacent to each other in the second or third direction among the plurality of third via electrodes 242a and 244a, and the plurality of fourth via electrodes 242b and 244b may overlap the second region R2, R4.

Hereinafter, a detailed description of the third via electrodes 242a and 244a and the fourth via electrodes 242b and 244b will not be provided. However, the third via electrodes 242a and 244a and the fourth via electrodes 242b and 244b may have a configuration similar to the first via electrodes 241a and 243a and the second via electrodes 241b and 243b. Accordingly, the description of the first via electrodes 241a and 243a and the second via electrodes 241b and 243b described above may be applied to the third via electrodes 242a and 244a and the fourth via electrodes 242b and 244b, unless otherwise indicated.

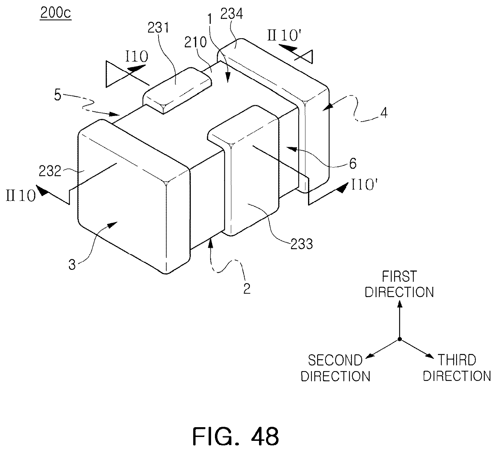

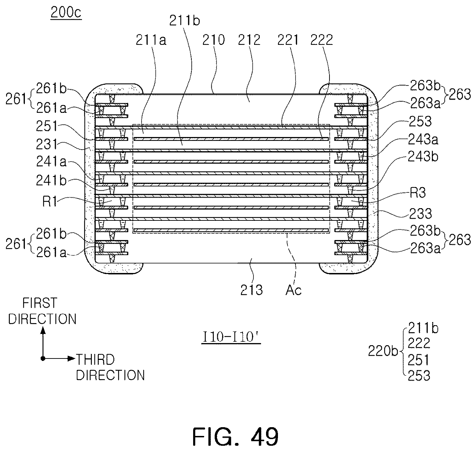

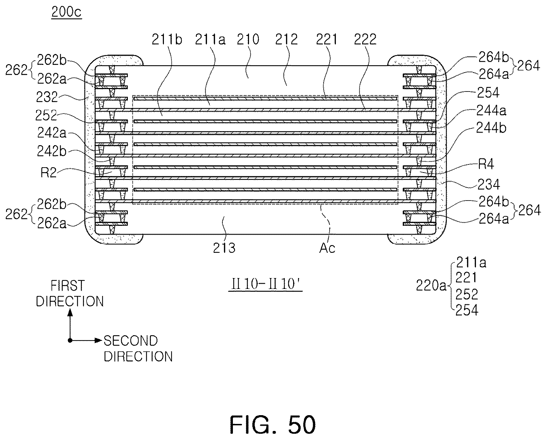

FIG. 48 is a perspective diagram illustrating a multilayer electronic component according to a second modified example of a second embodiment of the present disclosure. FIG. 49 is a cross-sectional diagram taken along line I10-I10' in FIG. 48. FIG. 50 is a cross-sectional diagram taken along line II10-II10' in FIG. 48.

Hereinafter, a multilayer electronic component 200c according to a second modified example of the second embodiment will be described with reference to FIGS. 48 to 50. The same/similar reference numerals are used for the components of the multilayer electronic components 200a and 200b described in FIGS. 34 to 47, and overlapping descriptions will not be provided.

The first external electrodes 231 and 233 may be disposed on at least one surface among the first and second surfaces 1 and 2. For example, a pair of the first external electrodes 231 and 233 may be disposed on the fifth and sixth surfaces 5 and 6, respectively, and may extend to at least one surface among the first and second surfaces 1 and 2.

The second external electrodes 232 and 234 may be disposed on at least one surface among the first and second surfaces 1 and 2. For example, a pair of second external electrodes 232 and 234 may be disposed on the third and fourth surfaces 3 and 4, respectively, and may extend to at least one of the first and second surfaces 1 and 2.

The multilayer electronic component 200c may include first contact structures 261 and 263 penetrating the cover portions 212 and 213 and connecting the first internal electrode 221 or the first auxiliary electrodes 251 and 253 disposed in an outermost region with respect to the first direction to the first external electrodes 231 and 233.

The first contact structures 261 and 263 may include first through-electrodes 261a and 263a and first dummy electrodes 261b and 263b alternately disposed in the first direction. The first dummy electrodes 261b and 263b may be connected to the first external electrodes 231 and 233 on the fifth and sixth surfaces 5 and 6, but an embodiment thereof is not limited thereto. The first contact structures 261 and 263 may be disposed in the first and second cover portions 212 and 213, respectively.

The first contact structures 261 and 263 may be formed in a similar manner to the auxiliary electrode and the via electrode. For example, the first contact structures 261 and 263 may be formed by forming a dummy electrode pattern on a sheet for forming a cover portion on which a via is formed, and laminating two or more layers of the sheet for forming a cover portion on which the dummy electrode pattern is formed.

The first contact structures 261 and 263 may have a structure similar to the auxiliary electrodes 251 and 253 and the via electrodes 241a, 243a, 241b, and 243b. For example, a plurality of the first through-electrodes 261a and 263a may be disposed, and the plurality of first through-electrodes 261a and 263a may be arranged in the second and third directions. For example, the plurality of first through-electrodes 261a and 263a disposed on the same level may have a first or second lattice pattern.

The multilayer electronic component 200c may penetrate the cover portions 212 and 213 and may include second contact structures 262 and 264 connecting the second internal electrode 222 or the second auxiliary electrodes 252 and 254 disposed in an outermost region with respect to the first direction to the second external electrodes 232 and 234.

The second contact structures 262 and 264 may include second through-electrodes 262a and 264a and second dummy electrode 262b and 264b alternately disposed in the first direction. The second dummy electrodes 262b and 264b may be connected to the second external electrodes 232 and 234 on the third and fourth surfaces 3 and 4, but an embodiment thereof is not limited thereto. The second contact structures 262 and 264 may be disposed in the first and second cover portions 212 and 213, respectively.

For example, a plurality of the second through-electrodes 262a and 264a may be disposed, and the plurality of second through-electrodes 262a and 264a may be arranged in the second and third directions. For example, the plurality of second through-electrodes 262a and 264a disposed on the same level may have a third or fourth lattice pattern.

Hereinafter, a detailed description of the second contact structures 262 and 264 will not be provided. However, the second contact structures 262 and 264 may have a configuration similar to that of the first contact structures 261 and 263. Accordingly, the description of the first contact structures 261 and 263 described above may be applied to the second contact structures 262 and 264, unless otherwise indicated.

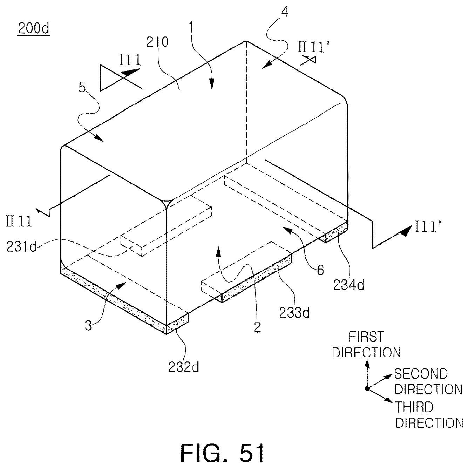

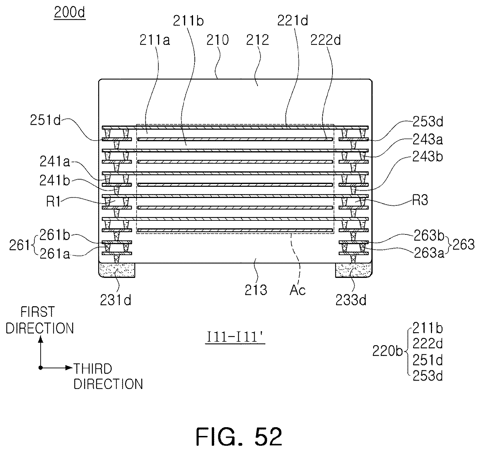

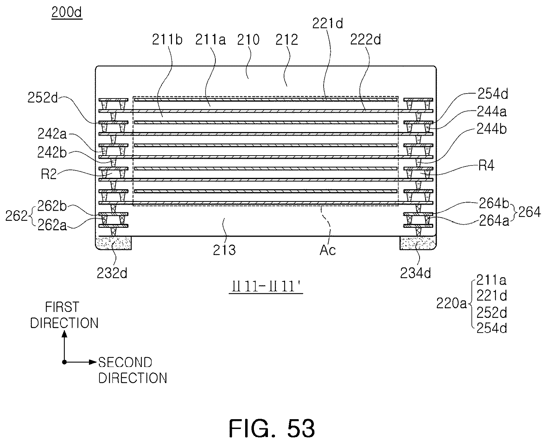

FIG. 51 is a perspective diagram illustrating a multilayer electronic component according to a third modified example of a second embodiment of the present disclosure. FIG. 52 is a cross-sectional diagram taken along line I11-I11' in FIG. 51. FIG. 53 is a cross-sectional diagram taken along line II11-II11' in FIG. 51.

Hereinafter, a multilayer electronic component 200d according to a third modified example of the second embodiment will be described with reference to FIGS. 51 to 53. The same/similar reference numerals are used for the components of the multilayer electronic component 200c described in FIGS. 48 to 50, and overlapping descriptions will not be provided.

The first external electrodes 231d and 233d may be disposed on the second surface 2 and may not be disposed on the first surface 1. For example, a pair of the first external electrodes 231d and 233d may be spaced apart from each other in the third direction on the second surface 2. The first external electrodes 231d and 233d may not extend to the fifth and sixth surfaces 5 and 6, but an embodiment thereof is not limited thereto, and the first external electrodes 231d and 233d may extend to at least one of the fifth and sixth surfaces 5 and 6.

The second external electrodes 232d and 234d may be disposed on the second surface 2 and may not be disposed on the first surface 1. For example, a pair of second external electrodes 232d and 234d may be spaced apart from each other in the second direction on the second surface 2. The second external electrodes 232d and 234d may not extend from the third to sixth surfaces 3, 4, 5, and 6, but an embodiment thereof is not limited thereto, and the second external electrodes 232d and 234d may extend from at least one surface of the third to sixth surfaces 3, 4, 5, and 6.

The multilayer electronic component 200d may include first contact structures 261 and 263 penetrating the cover portion 213 and connecting the first internal electrode 221d or the first auxiliary electrode 251d and 253d disposed in an outermost region with respect to the first direction to the first external electrodes 231d and 233d. The first contact structures 261 and 263 may be disposed in the second cover portion 113 and may not be disposed in the first cover portion 112.

The multilayer electronic component 200d may include a second contact structures 262 and 264 penetrating the cover portion 113 and connecting the second internal electrode 222d or the second auxiliary electrodes 252d and 254d disposed in the outermost region with respect to the first direction to the second external electrodes 232d and 234d. The second contact structures 262 and 264 may be disposed in the second cover portion 113 and may not be disposed in the first cover portion 112.

The internal electrode 221d and 222d may be spaced apart from the third to sixth surfaces 3, 4, 5, and 6. Similarly, the auxiliary electrodes 251d, 252d, 253d, and 254d and the dummy electrodes 261b, 262b, 263b, and 264b may be spaced apart from the third to sixth surfaces 3, 4, 5, and 6. Accordingly, moisture resistance reliability of the multilayer electronic component 200d may be prevented from being deteriorated.

Also, the external electrodes 231d, 232d, 233d, and 234d may be disposed only on the second surface 2, thereby improving capacitance per unit volume and bending strength of the multilayer electronic component 100f.

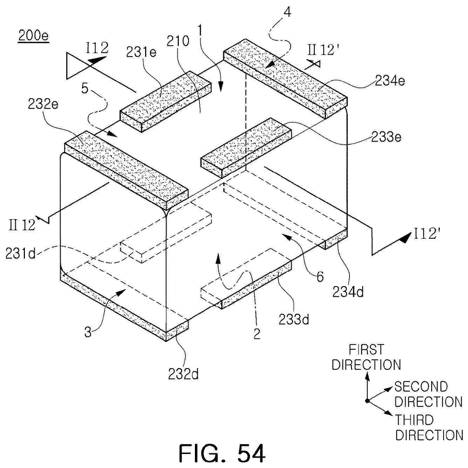

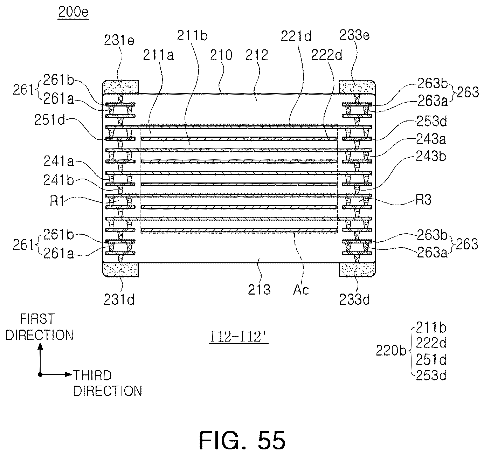

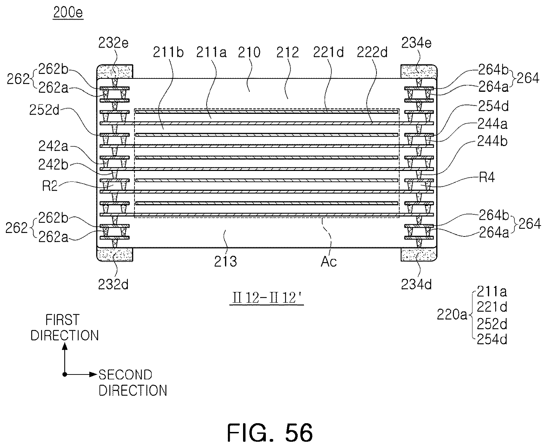

FIG. 54 is a perspective diagram illustrating a multilayer electronic component according to a fourth modified example of a second embodiment of the present disclosure. FIG. 55 is a cross-sectional diagram taken along line I12-I12' in FIG. 54. FIG. 56 is a cross-sectional diagram taken along line II12-II12' in FIG. 54.

Hereinafter, a multilayer electronic component 200e according to a fourth modified example of the second embodiment will be described with reference to FIGS. 54 to 56. The same/similar reference numerals are used for the components of the multilayer electronic component 200d described in FIGS. 51 to 53, and overlapping descriptions will not be provided.

The first external electrodes 231d, 233d, 231e, and 233e may be disposed on the first and second surfaces 1 and 2, respectively. For example, a pair of first external electrodes 231d and 233d may be spaced apart from each other in a third direction on the second surface 2, and a pair of first external electrodes 231e and 233e may be spaced apart from each other in the third direction on the first surface 1.

The first external electrodes 231e and 233e disposed on the first surface 1 and the first external electrodes 231d and 233d disposed on the second surface 2 may be spaced apart from each other. The first external electrodes 231d, 233d, 231e, and 233e may not extend to the fifth and sixth surfaces 5 and 6, but an embodiment thereof is not limited thereto, and the first external electrodes 231d, 233d, 231e, and 233e may extend to at least one of the fifth and sixth surfaces 5 and 6.

The second external electrodes 232d, 234d, 232e, and 234e may be disposed on the first and second surfaces 1 and 2, respectively. For example, a pair of second external electrodes 232d and 234d may be spaced apart from each other in the second direction on the second surface 2, and a pair of second external electrodes 232e and 234e may be spaced apart from each other in the second direction on the first surface 1.

The second external electrodes 232e and 234e disposed on the first surface 1 and the second external electrodes 232d and 234d disposed on the second surface 2 may be spaced apart from each other. The second external electrodes 232d, 234d, 232e, and 234e may not extend from the third to sixth surfaces 3, 4, 5, and 6, but an embodiment thereof is not limited thereto, and the second external electrodes 232d, 234d, 232e, and 234e may extend from at least one surface of the third to sixth surfaces 3, 4, 5, and 6.

The internal electrodes 221d and 222d may be spaced apart from the third to sixth surfaces 3, 4, 5, and 6. Similarly, the auxiliary electrodes 251d, 252d, 253d, and 254d and the dummy electrodes 261b, 262b, 263b, and 264b may be spaced apart from the third to sixth surfaces 3, 4, 5, and 6. Accordingly, moisture resistance reliability of the multilayer electronic component 200e may be prevented from deteriorating.

Also, since the first external electrodes 231d, 233d, 231e, and 233e and the second external electrodes 232d, 234d, 232e, and 234e may be disposed on the first and second surfaces 1 and 2, respectively, the multilayer electronic component 200e may assure mounting convenience compared to the multilayer electronic component 200d.

### (Method of manufacturing multilayer electronic component)

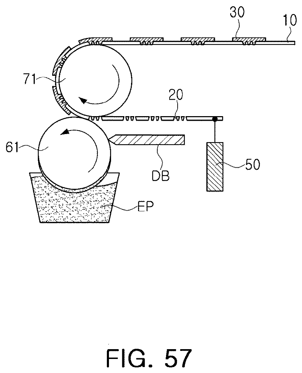

FIG. 57 is a cross-sectional diagram illustrating a filling and printing process for manufacturing a multilayer electronic component according to a first or second embodiment.

Hereinafter, an example of a method for manufacturing a multilayer electronic component 100a, 200a according to the first embodiment or the second embodiment will be described with reference to FIG. 57.

The method of manufacturing a multilayer electronic component will be described with respect to the multilayer electronic component 100a, 200a according to the first embodiment or the second embodiment, and this may be applied to the multilayer electronic components 100b, 100c, 100d, 100e, 100f, and 100g according to the first to sixth modified examples of the first embodiment and the multilayer electronic components 200b, 200c, 200d, and 200e according to the first to fourth modified examples of the second embodiment unless otherwise indicated.

Hereinafter, the method of manufacturing a multilayer electronic component will be described for each process.

### (Process of preparing dielectric sheet)

Dielectric powder to form a dielectric sheet 10 may be prepared. Examples of the dielectric powder may include BaTiO₃, (Ba₁₋ₓCaₓ)TiO₃ (0<x<1), Ba(Ti_{1-y}Ca_{y})O₃ (0<y<1), (Ba₁-ₓCaₓ)(Ti_{1-y}Zr_{y})O₃ (0<x<1, 0<y<1), Ba(Ti_{1-y}Zr_{y})O₃ (0<y<1), CaZrO₃, or (Ca₁₋ₓSrₓ)(Zr_{1-y}Ti_{y})O₃ (0<x≤0.5, 0<y≤0.5). The BaTiO₃ powder may be synthesized by reacting a titanium raw material such as titanium dioxide with a barium raw material such as barium carbonate, for example. The method of synthesizing the dielectric powder may include, for example, a solid-state method, a sol-gel method, a hydrothermal synthesis method, etc., but an embodiment thereof is not limited thereto.

Thereafter, the prepared dielectric powder may be dried and pulverized, and mixed with an organic solvent such as ethanol and a binder such as polyvinyl butyral may be mixed to manufacture a dielectric slurry, and the dielectric slurry may be applied to a carrier film and may be dried, thereby manufacturing a dielectric sheet 10.

The dielectric sheet 10 may form a dielectric layer by firing of the unit laminate described later.

### (Process of forming via)

The manufactured dielectric sheet 10 may be continuously supplied, for example, by moving from a supply roller (not illustrated) on which the dielectric sheet 10 is wound to a rewind roller (not illustrated) which rewinds the dielectric sheet 10.

In this case, a via 20 may be formed in the dielectric sheet 10 continuously supplied. The process of forming the via 20 may be performed, for example, by irradiating the dielectric sheet 10 with a laser. The laser may be irradiated from a laser device 50 disposed on the dielectric sheet 10.

The type of the laser device 50 is not limited to any particular example, and examples thereof a CO₂ laser, a YAG laser, a femtosecond laser, or a picosecond UV laser may be used. The via 20 may be formed by laser processing such that the via 20 have a tapered shape in which a width may gradually decrease from one surface of the dielectric sheet 10 to the other surface.

### (Filling process)

Thereafter, a filled process for filling the via 20 with electrode paste EP may be performed. The electrode paste EP may include, for example, metal powder, a binder, an organic solvent, or the like.

The method for filling the via 20 with the electrode paste EP is not limited to any particular example. For example, as illustrated in FIG. 57, the dielectric sheet 10 may pass between the application roller 61 and the cylinder 71. The application roller 61 may be in contact with the electrode paste EP, and the electrode paste EP may be filled in the concave portion (not illustrated) formed on the outer surface of the application roller 61 by rotational driving of the application roller 61.

Meanwhile, the application roller 61 and the cylinder 71 may apply pressure to the dielectric sheet 10 by rotating in opposite directions. The electrode paste EP applied to the outer surface of the application roller 61 by pressure may be filled into the via 20 formed on the moving dielectric sheet 10. The electrode paste EP filled into the via 20 may form a via electrode by firing of the unit laminate described later.

The excess electrode paste EP applied to an external surface of the application roller 61 may be removed using a doctor blade (DB).

### (Printing process)

A printing process for printing an internal electrode pattern 30 connected to the via 20 on the dielectric sheet 10 may be performed. The method for forming the internal electrode pattern 30 is not limited to any particular example. For example, the internal electrode pattern 30 may be formed using an application roller 61 and a cylinder 71. That is, the printing process may include a process for supplying electrode paste EP to an outer surface of the application roller 61, and a process for applying electrode paste EP on the dielectric sheet 10 by allowing the dielectric sheet 10 to be in contact with the application roller 61.

In this case, by controlling the shape of the concave portion (not illustrated) formed on the external surface of the application roller 61, the via 20 may be filled with electrode paste EP and simultaneously the internal electrode pattern 30 may be formed. That is, in an embodiment, the filling process and the printing process may be performed simultaneously. The printed internal electrode pattern 30 may be dried using a drying device.

The internal electrode pattern 30 may form the internal electrode by firing the unit laminate described later. Also, although not illustrated, the auxiliary electrode pattern forming the auxiliary electrode by firing the unit laminate may also be formed in the same manner as the internal electrode pattern 30.

### (Laminating process)

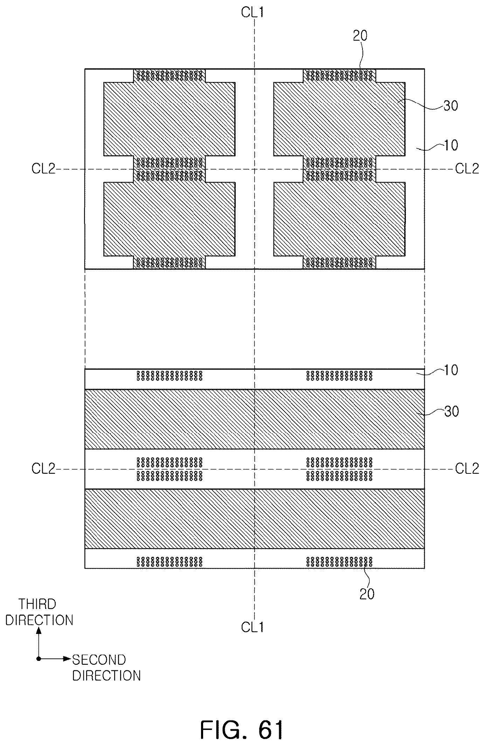

FIG. 61 is a plan diagram illustrating a dielectric sheet having an internal electrode pattern and vias formed thereon for manufacturing a multilayer electronic component according to a first embodiment.

To form the multilayer electronic component 100a according to the first embodiment, a predetermined number of dielectric sheets 10 on which different internal electrode patterns 30 are printed may be laminated and a laminate may be formed. To form connection electrodes 141, 142, 143, and 144, the vias 20 formed on different dielectric sheets 10 may be aligned in the laminate process. However, the vias 20 formed on each dielectric sheet 10 may not be perfectly aligned with each other, and accordingly, the laminated vias 20 may be laminated with center axes thereof shifted from each other. Meanwhile, since the vias 20 may have a tapered shape, vias formed on different dielectric sheets 10 may be easily aligned.

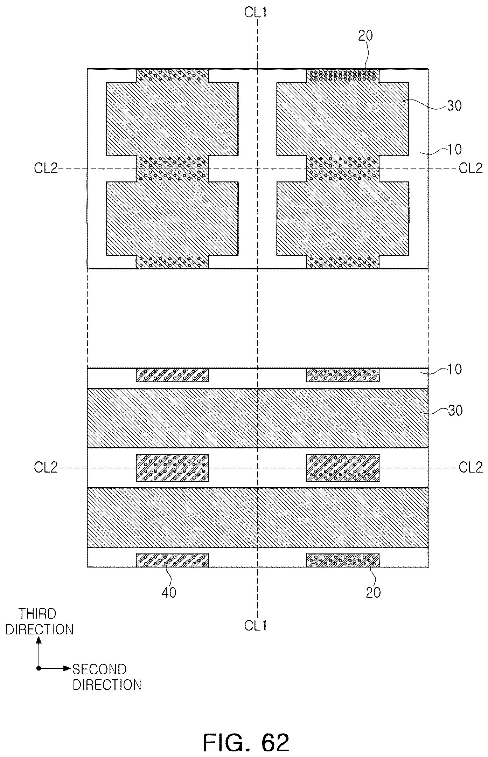

FIG. 62 is a plan diagram illustrating a dielectric sheet having an internal electrode pattern and vias formed thereon for manufacturing a multilayer electronic component according to a second embodiment.

To form a multilayer electronic component 200a according to the second embodiment, a predetermined number of dielectric sheets 10 on which different internal electrode patterns 30 are printed may be laminated and a laminate may be formed. Also, the auxiliary electrode pattern 40 may be appropriately formed on the dielectric sheet 10.

As for the laminate for forming the multilayer electronic component 200a according to the second embodiment, the auxiliary electrode pattern 40 may be included, such that it may not be necessary to align the vias 20 formed on different dielectric sheets 10, such that process convenience may be assured.

In the upper and lower portions in the first direction of the laminate, a sheet for forming the cover portion in which the internal electrode pattern and the auxiliary electrode pattern are not formed may be laminated in a predetermined number of layers to form the cover portion after firing.

To form the multilayer electronic component 100e, 100f, and 100g according to the fourth to sixth modified examples of the first embodiment, a sheet for forming the cover portion in which the vias are formed may be laminated in a predetermined number of layers in the upper and lower portions in the first direction of the laminate.

To manufacture the multilayer electronic component 200c, 200d, and 200e according to the second to fourth modified example of the second embodiment, a sheet for forming a cover portion in which a via and a dummy electrode pattern are formed may be laminated in a predetermined number of layers on the upper and lower portions of the laminate in the first direction.

### (Cutting and firing process)

Thereafter, the laminate may be pressed, and the laminate may be cut along a plurality of cutting lines CL1 and CL2, thereby obtaining a unit laminate.

Also, the unit laminate may be fired to obtain a body. The firing may be performed at a temperature of, for example, 1000°C or higher and 1400°C or lower, but an embodiment thereof is not limited thereto.

### (Process of forming external electrode)

Thereafter, an external electrode may be formed on the body. The method of forming the external electrode is not limited to any particular example.

When the external electrode includes a firing electrode layer, the process of forming an external electrode may include a process of dipping the body into a firing paste including a metal powder and glass frit, a binder, and an organic solvent, and firing the firing paste at a temperature of 500°C to 900°C.

However, an embodiment thereof is not limited thereto, and to manufacture the multilayer electronic components 100f, 100g, 200d, and 200e according to the fifth and sixth modified examples of the first embodiment and the third and fourth modified examples of the second embodiment having an electrode structure, the process of forming an external electrode may include a process of transferring a sheet including a metal to a body.

When the external electrode includes a conductive resin layer, the process of forming an external electrode may include a process of dipping the body into a conductive resin composition including a metal powder, resin, a binder, and an organic solvent, and performing a curing heat treatment at a temperature of 250°C to 550°C.

When the external electrode includes a thin-film electrode layer, the process of forming an external electrode may include a process of performing an atomic layer deposition (ALD) method, a chemical vapor deposition (CVD) method, and/or a sputtering method.

Also, electrolytic plating and/or electroless plating may be further performed, thereby forming a plating layer.

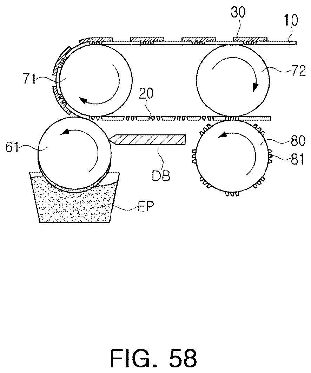

FIGS. 58 to 60 are cross-sectional diagrams illustrating a modified example of FIG. 57.

Hereinafter, a modified example of a method of manufacturing a multilayer electronic component according to the first embodiment or the second embodiment will be described with reference to FIGS. 58 to 60.

The same/similar reference numerals are used for the same/similar configurations described in FIG. 57, and overlapping descriptions will not be provided.

Referring to FIG. 58, a process of forming a via 20 may be performed by allowing a dielectric sheet 10 to be in contact with an imprint roller 80 having a convex portion 81 disposed on an outer surface thereof.

Specifically, the dielectric sheet 10 may pass between the imprint roller 80 and the cylinder 72. In this case, the imprint roller 80 and the cylinder 72 may apply pressure to the dielectric sheet 10 by rotating in opposite directions. The via 20 may be formed on the dielectric sheet 10 by the pressure and the convex portion 81.

The convex portion 81 formed on the outer surface of the imprint roller 80 may have a pattern corresponding to the lattice pattern of the via electrode.

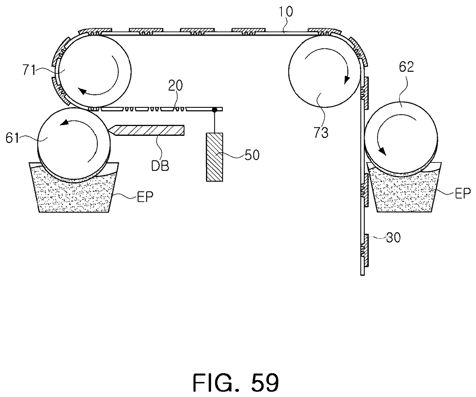

Referring to FIG. 59, after the via 20 is formed by irradiating the dielectric sheet 10 with a laser, the electrode paste EP may be filled into the via 20 using the application roller 61 and the cylinder 71.

Thereafter, the electrode paste EP may be applied on the dielectric sheet 10 using the application roller 62 and the cylinder 73 and the internal electrode pattern 30 may be separately formed. That is, the filling process and the printing process may be performed in order.

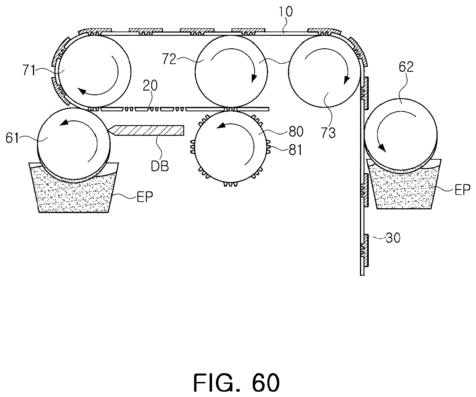

Referring to FIG. 60, a via 20 may be formed on an outer surface of a dielectric sheet 10 using the imprint roller 80 and the cylinder 72 having a convex portion 81 disposed thereon, electrode paste EP may be filled into the via 20 using the application roller 61 and the cylinder 71.

Specifically, the dielectric sheet 10 may pass between the imprint roller 80 and the cylinder 72. In this case, the imprint roller 80 and the cylinder 72 may apply pressure to the dielectric sheet 10 by rotating in opposite directions, and accordingly, the via 20 may be formed in the dielectric sheet 10.

Thereafter, the electrode paste EP may be applied to the dielectric sheet 10 using the application roller 62 and the cylinder 73 and an internal electrode pattern 30 may be separately formed. That is, the filling process and the printing process may be performed in order.

According to the aforementioned embodiments, a multilayer electronic component having excellent mechanical strength and electrical properties may be provided.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The suggested embodiments may be implemented do not exclude the possibilities of combination with features of other embodiments. For example, even though the features described in an embodiment are not described in the other embodiment, the description may be understood as relevant to the other embodiment unless otherwise indicated.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element without departing from the scope of right of the example embodiments.

While the embodiments have been illustrated and described above, it will be configured as apparent to those skilled in the art that modifications and variations could be made without departing from the scope of the present disclosure as defined by the appended claims.

## Claims

1. A multilayer electronic component (100a, 100b, 100c, 100d, 100e, 100f, 100g), comprising:
a body (110) including a dielectric layer (111) and first and second internal electrodes (121, 122, 121f, 122f) alternately disposed with the dielectric layer (111), and including first and second surfaces (1, 2) opposing each other in a first direction, third and fourth surfaces (3, 4) connected to the first and second surfaces (1, 2) and opposing each other in a second direction, and fifth and sixth surfaces (5, 6) connected to the first to fourth surfaces (1, 2, 3, 4) and opposing each other in a third direction;
a first external electrode (131, 133, 131f, 133f, 131g, 133g) disposed on at least one surface among the first surface (1), the second surface (2), the fifth surface (5), and the sixth surface (6), and connected to the first internal electrodes (121, 121f);
a second external electrode (132, 134, 132f, 134f, 132g, 134g) disposed on at least one surface among the first surface (1), the second surface (2), the third surface (3), and the fourth surface (4), and connected to the second internal electrodes (122, 122f); and
a first connection electrode (141, 143, 141d, 143d) penetrating the dielectric layer (111) and connecting two first internal electrodes (121, 121f) adjacent to each other in the first direction,
**characterized in that** in the first connection electrode (141, 143, 141d, 143d), a plurality of first via electrodes (141a, 141b, 143a, 143b) shifted from each other in a direction perpendicular to the first direction are laminated in the first direction.

2. The multilayer electronic component (100a, 100b, 100c, 100d, 100e, 100f, 100g) of claim 1, wherein a plurality of the first connection electrode (141, 143, 141d, 143d) penetrating the same dielectric layer (111) are arranged in the second and third directions.

3. The multilayer electronic component (100b, 100c, 100d, 100e, 100f, 100g) of claim 1, further comprising:
a second connection electrode (142, 144, 142d, 144d) penetrating the dielectric layer (111) and connecting two second internal electrodes (122, 122f) adjacent to each other in the first direction,
wherein, in the second connection electrode (142, 144, 142d, 144d), a plurality of second via electrodes (142a, 142b, 144a, 144b) shifted from each other in the direction perpendicular to the first direction are laminated in the first direction.

4. The multilayer electronic component (100c) of claim 1, further comprising:
a first auxiliary electrode (151, 153) spaced apart from one of the second internal electrodes (122) in the third direction, and disposed between first via electrodes (141a, 141b, 143a, 143b) adjacent to each other among the plurality of first via electrodes (141a, 141b, 143a, 143b).

5. The multilayer electronic component (100d) of claim 1, wherein the first connection electrode (141d, 143d) includes a plurality of first connection electrodes (141d, 143d), and two first connection electrodes (141d, 143d) adjacent to each other in the first direction among the plurality of first connection electrodes (141d, 143d) are shifted from each other in the direction perpendicular to the first direction.

6. The multilayer electronic component (100e, 100f, 100g) of claim 1,
wherein the body (110) includes a capacitance formation portion (Ac) in which the first and second internal electrodes (121, 122, 121f, 122f) are alternately disposed in the first direction with the dielectric layer (111) interposed therebetween, and a cover portion (112, 113) disposed on both surfaces of the capacitance formation portion (Ac) opposing each other in the first direction,
wherein the first external electrode (131, 133, 131f, 133f, 131g, 133g) is disposed on at least one surface of the first and second surfaces (1, 2), and
wherein the multilayer electronic component (100e, 100f, 100g) includes a first contact electrode (161, 163) penetrating the cover portion (112, 113) and connecting the first internal electrode (121, 121f) disposed in an outermost region in the first direction to the first external electrode (131, 133, 131f, 133f, 131g, 133g).

7. The multilayer electronic component (100f) of claim 6, wherein each of the first and second external electrodes (131f, 133f, 132f, 134f) is disposed on the second surface (2) and is not disposed on the first surface (1).

8. The multilayer electronic component (100g) of claim 6,
wherein the first external electrode (131f, 133f, 131g, 133g) is disposed on each of the first and second surfaces (1, 2), and the second external electrode (132f, 134f, 132g, 134g) is disposed on each of the first and second surfaces (1, 2), and
wherein the first and second external electrodes (131g, 133g, 132g, 134g) disposed on the first surface (1) are spaced apart from the first and second external electrodes (131f, 133f, 132f, 134f) disposed on the second surface (2).

9. A multilayer electronic component (200a, 200b, 200c, 200d, 200e), comprising:
a body (210) including first and second surfaces (1, 2) opposing each other in a first direction, third and fourth surfaces (3, 4) connected to the first and second surfaces (1, 2) and opposing each other in a second direction, and fifth and sixth surfaces (5, 6) connected to the first to fourth surfaces (1, 2, 3, 4) and opposing each other in a third direction,
the body (210) including a first internal electrode layer (220a) including a first dielectric layer (211a) and a first internal electrode (221, 221d) disposed on the first dielectric layer (211a) and including a first main portion (221a) and a first lead portion (221b, 221c) extending from the first main portion (221a) to the fifth surface (5) or sixth surface (6),
the body (210) including a second internal electrode layer (220b) including a second dielectric layer (211b), a second internal electrode (222, 222d) disposed on the second dielectric layer (211b) and overlapping the first main portion (221a) in the first direction, and a first auxiliary electrode (251, 253, 251d, 253d) spaced apart from the second internal electrode (222, 222d) in the third direction,
wherein the first and second internal electrodes layers (220a, 220b) are alternately disposed in the first direction;
a first external electrode (231, 233, 231d, 233d, 231e, 233e) disposed on at least one surface among the first surface (1), the second surface (2), the fifth surface (5), and the sixth surface (6), and connected to the first internal electrode (221, 221d);
a second external electrode (232, 234, 232d, 234d, 232e, 234e) disposed on at least one surface among the first surface (1), the second surface (2), the third surface (3), and the fourth surface (4), and connected to the second internal electrode (222, 222d);
a first via electrode (241a, 243a) penetrating the first dielectric layer (211a) and connecting the first lead portion (221b, 221c) to the first auxiliary electrode (251, 253, 251d, 253d); and
a second via electrode (241b, 243b) penetrating the second dielectric layer (211b) and connecting the first lead portion (221b, 221c) to the first auxiliary electrode (251, 253, 251d, 253d),
**characterized in that** the first via electrode (241a, 243a) and the second via electrode (241b, 243b) are shifted from each other in a direction perpendicular to the first direction.

10. The multilayer electronic component (200a, 200b, 200c, 200d, 200e) of claim 9,
wherein a plurality of the first via electrodes (241a, 243a) penetrating the same first dielectric layer (211a) are disposed, and a plurality of the second via electrodes (241b, 243b) penetrating the same second dielectric layer (211b) are disposed,
wherein the first via electrodes (241a, 243a) penetrating the same first dielectric layer (211a) are arranged in the second and third directions, and the second via electrodes (241b, 243b) penetrating the same second dielectric layer (211b) are arranged in the second and third directions, and
wherein the first dielectric layer (211a) includes a first region (R1, R3) disposed between two first via electrodes (241a, 243a) adjacent to each other in the second or third direction among a plurality of the first via electrodes (241a, 243a), and
wherein the plurality of the second via electrodes (241b, 243b) overlap the first region (R1, R3) in the first direction.

11. The multilayer electronic component (200b, 200c, 200d, 200e) of claim 9,
wherein the second internal electrode (222, 222d) includes a second main portion (222a) overlapping the first internal electrode (221, 221d) in the first direction, and a second lead portion (222b, 222c) extending from the second main portion (222a) to the third surface (3) or the fourth surface (4),
wherein the first internal electrode layer (220a) further includes a second auxiliary electrode (252, 254, 252d, 254d) disposed on the first dielectric layer (211a) and spaced apart from the first internal electrode (221, 221d) in the second direction,
wherein the multilayer electronic component (200b, 200c, 200d, 200e) further includes a third via electrode (242a, 244a) penetrating the first dielectric layer (211a) and connecting the second lead portion (222b, 222c) to the second auxiliary electrode (252, 254, 252d, 254d), and a fourth via electrode (242b, 244b) penetrating the second dielectric layer (211b) and connecting the second lead portion (222b, 222c) to the second auxiliary electrode (252, 254, 252d, 254d), and
wherein the third via electrode (242a, 244a) and the fourth via electrode (242b, 244b) are shifted from each other in the direction perpendicular to the first direction.

12. The multilayer electronic component (200c, 200d, 200e) of claim 9,
wherein the body (210) includes a capacitance formation portion (Ac) in which first and second internal electrodes (221, 222, 221d, 222d) are alternately disposed with the first dielectric layer (211a) or the second dielectric layer (211b) therebetween, and a cover portion (212, 213) disposed on both surfaces of the capacitance formation portion (Ac) opposing each other in the first direction,
wherein the first external electrode (231, 233, 231d, 233d, 231e, 233e) is disposed on at least one of the first and second surfaces (1, 2), and
wherein the multilayer electronic component (200c, 200d, 200e) further includes a first contact structure (261, 263) penetrating the cover portion (212, 213) and connecting the first internal electrode (221, 221d) or the first auxiliary electrode (251, 253, 251d, 253d) disposed in an outermost region in the first direction to the first external electrode (231, 233, 231d, 233d, 231e, 233e).

13. The multilayer electronic component (200d) of claim 12, wherein each of the first and second external electrodes (231d, 233d, 232d, 234d) is disposed on the second surface (2) and is not disposed on the first surface (1).

14. The multilayer electronic component (200e) of claim 12,
wherein first external electrode (231d, 233d, 231e, 233e) is disposed on each of the first and second surfaces (1, 2), and the second external electrode (232d, 234d, 232e, 234e) is disposed on each of the first and second surfaces (1, 2), and
wherein the first and second external electrodes (231e, 233e, 232e, 234e) disposed on the first surface (1) are spaced apart from the first and second external electrodes (231d, 233e, 232d, 234e) disposed on the second surface (2).

15. The multilayer electronic component (200a, 200b, 200c) of claim 9, wherein a thickness of an end exposed to the fifth surface (5) or the sixth surface (6) of the first lead portion (221b, 221c) is greater than a thickness of a central portion of the first main portion (221a) in the third direction.

## Patentansprüche

1. Mehrschichtiges elektronisches Bauteil (100a, 100b, 100c, 100d, 100e, 100f, 100g), umfassend:
einen Körper (110), der eine dielektrische Schicht (111) und erste und zweite Innenelektroden (121, 122, 121f, 122f), die abwechselnd mit der dielektrischen Schicht (111) angeordnet sind, umfasst und erste und zweite Oberflächen (1, 2), die einander in einer ersten Richtung gegenüberliegen, dritte und vierte Oberflächen (3, 4), die mit den ersten und zweiten Oberflächen (1, 2) verbunden sind und einander in einer zweiten Richtung gegenüberliegen, und fünfte und sechste Oberflächen (5, 6), die mit den ersten bis vierten Oberflächen (1, 2, 3, 4) verbunden sind und einander in einer dritten Richtung gegenüberliegen, aufweist;
eine erste Außenelektrode (131, 133, 131f, 133f, 131g, 133g), die auf mindestens einer Oberfläche unter der ersten Oberfläche (1), der zweiten Oberfläche (2), der fünften Oberfläche (5) und der sechsten Oberfläche (6) angeordnet und mit den ersten Innenelektroden (121, 121f) verbunden ist;
eine zweite Außenelektrode (132, 134, 132f, 134f, 132g, 134g), die auf mindestens einer Oberfläche unter der ersten Oberfläche (1), der zweiten Oberfläche (2), der dritten Oberfläche (3) und der vierten Oberfläche (4) angeordnet und mit den zweiten Innenelektroden (122, 122f) verbunden ist; und
eine erste Verbindungselektrode (141, 143, 141d, 143d), die die dielektrische Schicht (111) durchdringt und zwei in der ersten Richtung zueinander benachbarte erste Innenelektroden (121, 121f) miteinander verbindet,
**dadurch gekennzeichnet, dass** in der ersten Verbindungselektrode (141, 143, 141d, 143d) eine Vielzahl von ersten Durchkontaktierungselektroden (141a, 141b, 143a, 143b), die in einer Richtung senkrecht zu der ersten Richtung gegeneinander versetzt sind, in der ersten Richtung gestapelt sind.

2. Mehrschichtiges elektronisches Bauteil (100a, 100b, 100c, 100d, 100e, 100f, 100g) nach Anspruch 1, wobei eine Vielzahl der ersten Verbindungselektroden (141, 143, 141d, 143d), die dieselbe dielektrische Schicht (111) durchdringen, in der zweiten und dritten Richtung angeordnet sind.

3. Mehrschichtiges elektronisches Bauteil (100b, 100c, 100d, 100e, 100f, 100g) nach Anspruch 1, ferner umfassend:
eine zweite Verbindungselektrode (142, 144, 142d, 144d), die die dielektrische Schicht (111) durchdringt und zwei in der ersten Richtung zueinander benachbarte zweite Innenelektroden (122, 122f) miteinander verbindet,
wobei in der zweiten Verbindungselektrode (142, 144, 142d, 144d) eine Vielzahl von zweiten Durchkontaktierungselektroden (142a, 142b, 144a, 144b), die in der Richtung senkrecht zu der ersten Richtung gegeneinander versetzt sind, in der ersten Richtung gestapelt sind.

4. Mehrschichtiges elektronisches Bauteil (100c) nach Anspruch 1, ferner umfassend:
eine erste Hilfselektrode (151, 153), die in der dritten Richtung von einer der zweiten Innenelektroden (122) beabstandet und zwischen zueinander benachbarten ersten Durchkontaktierungselektroden (141a, 141b, 143a, 143b) unter der Vielzahl von ersten Durchkontaktierungselektroden (141a, 141b, 143a, 143b) angeordnet ist.

5. Mehrschichtiges elektronisches Bauteil (100d) nach Anspruch 1, wobei die erste Verbindungselektrode (141d, 143d) eine Vielzahl von ersten Verbindungselektroden (141d, 143d) umfasst und zwei in der ersten Richtung zueinander benachbarte erste Verbindungselektroden (141d, 143d) unter der Vielzahl von ersten Verbindungselektroden (141d, 143d) in der Richtung senkrecht zu der ersten Richtung gegeneinander versetzt sind.

6. Mehrschichtiges elektronisches Bauteil (100e, 100f, 100g) nach Anspruch 1,
wobei der Körper (110) einen Kapazitätsbildungsabschnitt (Ac), in dem die ersten und zweiten Innenelektroden (121, 122, 121f, 122f) in der ersten Richtung abwechselnd mit der dazwischen angeordneten dielektrischen Schicht (111) angeordnet sind, und einen Abdeckabschnitt (112, 113), der auf beiden einander in der ersten Richtung gegenüberliegenden Oberflächen des Kapazitätsbildungsabschnitts (Ac) angeordnet ist, umfasst,
wobei die erste Außenelektrode (131, 133, 131f, 133f, 131g, 133g) auf mindestens einer Oberfläche der ersten und zweiten Oberflächen (1, 2) angeordnet ist, und
wobei das mehrschichtige elektronische Bauteil (100e, 100f, 100g) eine erste Kontakteelektrode (161, 163) umfasst, die den Abdeckabschnitt (112, 113) durchdringt und die in einem äußersten Bereich in der ersten Richtung angeordnete erste Innenelektrode (121, 121f) mit der ersten Außenelektrode (131, 133, 131f, 133f, 131g, 133g) verbindet.

7. Mehrschichtiges elektronisches Bauteil (100f) nach Anspruch 6, wobei jede der ersten und zweiten Außenelektroden (131f, 133f, 132f, 134f) auf der zweiten Oberfläche (2) angeordnet und nicht auf der ersten Oberfläche (1) angeordnet ist.

8. Mehrschichtiges elektronisches Bauteil (100g) nach Anspruch 6,
wobei die erste Außenelektrode (131f, 133f, 131g, 133g) jeweils auf der ersten und der zweiten Oberfläche (1, 2) angeordnet ist und die zweite Außenelektrode (132f, 134f, 132g, 134g) jeweils auf der ersten und der zweiten Oberfläche (1, 2) angeordnet ist, und
wobei die auf der ersten Oberfläche (1) angeordneten ersten und zweiten Außenelektroden (131g, 133g, 132g, 134g) von den auf der zweiten Oberfläche (2) angeordneten ersten und zweiten Außenelektroden (131f, 133f, 132f, 134f) beabstandet sind.

9. Mehrschichtiges elektronisches Bauteil (200a, 200b, 200c, 200d, 200e), umfassend:
einen Körper (210), der erste und zweite Oberflächen (1, 2), die einander in einer ersten Richtung gegenüberliegen, dritte und vierte Oberflächen (3, 4), die mit den ersten und zweiten Oberflächen (1, 2) verbunden sind und einander in einer zweiten Richtung gegenüberliegen, und fünfte und sechste Oberflächen (5, 6), die mit den ersten bis vierten Oberflächen (1, 2, 3, 4) verbunden sind und einander in einer dritten Richtung gegenüberliegen, aufweist;
wobei der Körper (210) eine erste Innenelektrodenschicht (220a) umfasst, die eine erste dielektrische Schicht (211a) und eine auf der ersten dielektrischen Schicht (211a) angeordnete erste Innenelektrode (221, 221d) umfasst, die einen ersten Hauptabschnitt (221a) und einen ersten Anschlussabschnitt (221b, 221c), der sich von dem ersten Hauptabschnitt (221a) zu der fünften Oberfläche (5) oder der sechsten Oberfläche (6) erstreckt, umfasst,
wobei der Körper (210) eine zweite Innenelektrodenschicht (220b) umfasst, die eine zweite dielektrische Schicht (211b), eine zweite Innenelektrode (222, 222d), die auf der zweiten dielektrischen Schicht (211b) angeordnet ist und den ersten Hauptabschnitt (221a) in der ersten Richtung überlappt, und eine erste Hilfselektrode (251, 253, 251d, 253d), die in der dritten Richtung von der zweiten Innenelektrode (222, 222d) beabstandet ist, umfasst,
wobei die ersten und zweiten Innenelektrodenschichten (220a, 220b) abwechselnd in der ersten Richtung angeordnet sind;
eine erste Außenelektrode (231, 233, 231d, 233d, 231e, 233e), die auf mindestens einer Oberfläche unter der ersten Oberfläche (1), der zweiten Oberfläche (2), der fünften Oberfläche (5) und der sechsten Oberfläche (6) angeordnet und mit der ersten Innenelektrode (221, 221d) verbunden ist;
eine zweite Außenelektrode (232, 234, 232d, 234d, 232e, 234e), die auf mindestens einer Oberfläche unter der ersten Oberfläche (1), der zweiten Oberfläche (2), der dritten Oberfläche (3) und der vierten Oberfläche (4) angeordnet und mit der zweiten Innenelektrode (222, 222d) verbunden ist;
eine erste Durchkontaktierungselektrode (241a, 243a), die die erste dielektrische Schicht (211a) durchdringt und den ersten Anschlussabschnitt (221b, 221c) mit der ersten Hilfselektrode (251, 253, 251d, 253d) verbindet; und
eine zweite Durchkontaktierungselektrode (241b, 243b), die die zweite dielektrische Schicht (211b) durchdringt und den ersten Anschlussabschnitt (221b, 221c) mit der ersten Hilfselektrode (251, 253, 251d, 253d) verbindet,
**dadurch gekennzeichnet, dass** die erste Durchkontaktierungselektrode (241a, 243a) und die zweite Durchkontaktierungselektrode (241b, 243b) in einer Richtung senkrecht zu der ersten Richtung gegeneinander versetzt sind.

10. Mehrschichtiges elektronisches Bauteil (200a, 200b, 200c, 200d, 200e) nach Anspruch 9,
wobei eine Vielzahl der ersten Durchkontaktierungselektroden (241a, 243a), die dieselbe erste dielektrische Schicht (211a) durchdringen, angeordnet ist und eine Vielzahl der zweiten Durchkontaktierungselektroden (241b, 243b), die dieselbe zweite dielektrische Schicht (211b) durchdringen, angeordnet ist,
wobei die ersten Durchkontaktierungselektroden (241a, 243a), die dieselbe erste dielektrische Schicht (211a) durchdringen, in der zweiten und dritten Richtung angeordnet sind und die zweiten Durchkontaktierungselektroden (241b, 243b), die dieselbe zweite dielektrische Schicht (211b) durchdringen, in der zweiten und dritten Richtung angeordnet sind, und
wobei die erste dielektrische Schicht (211a) einen ersten Bereich (R1, R3) umfasst, der zwischen zwei in der zweiten oder dritten Richtung zueinander benachbarten ersten Durchkontaktierungselektroden (241a, 243a) unter einer Vielzahl der ersten Durchkontaktierungselektroden (241a, 243a) angeordnet ist, und
wobei die Vielzahl der zweiten Durchkontaktierungselektroden (241b, 243b) den ersten Bereich (R1, R3) in der ersten Richtung überlappt.

11. Mehrschichtiges elektronisches Bauteil (200b, 200c, 200d, 200e) nach Anspruch 9,
wobei die zweite Innenelektrode (222, 222d) einen zweiten Hauptabschnitt (222a), der die erste Innenelektrode (221, 221d) in der ersten Richtung überlappt, und einen zweiten Anschlussabschnitt (222b, 222c), der sich von dem zweiten Hauptabschnitt (222a) zu der dritten Oberfläche (3) oder der vierten Oberfläche (4) erstreckt, umfasst,
wobei die erste Innenelektrodenschicht (220a) ferner eine zweite Hilfselektrode (252, 254, 252d, 254d) umfasst, die auf der ersten dielektrischen Schicht (211a) angeordnet und in der zweiten Richtung von der ersten Innenelektrode (221, 221d) beabstandet ist,
wobei das mehrschichtige elektronische Bauteil (200b, 200c, 200d, 200e) ferner eine dritte Durchkontaktierungselektrode (242a, 244a), die die erste dielektrische Schicht (211a) durchdringt und den zweiten Anschlussabschnitt (222b, 222c) mit der zweiten Hilfselektrode (252, 254, 252d, 254d) verbindet, und eine vierte Durchkontaktierungselektrode (242b, 244b), die die zweite dielektrische Schicht (211b) durchdringt und den zweiten Anschlussabschnitt (222b, 222c) mit der zweiten Hilfselektrode (252, 254, 252d, 254d) verbindet, umfasst, und
wobei die dritte Durchkontaktierungselektrode (242a, 244a) und die vierte Durchkontaktierungselektrode (242b, 244b) in der Richtung senkrecht zu der ersten Richtung gegeneinander versetzt sind.

12. Mehrschichtiges elektronisches Bauteil (200c, 200d, 200e) nach Anspruch 9,
wobei der Körper (210) einen Kapazitätsbildungsabschnitt (Ac), in dem erste und zweite Innenelektroden (221, 222, 221d, 222d) abwechselnd mit der ersten dielektrischen Schicht (211a) oder der zweiten dielektrischen Schicht (211b) dazwischen angeordnet sind, und einen Abdeckabschnitt (212, 213), der auf beiden einander in der ersten Richtung gegenüberliegenden Oberflächen des Kapazitätsbildungsabschnitts (Ac) angeordnet ist, umfasst,
wobei die erste Außenelektrode (231, 233, 231d, 233d, 231e, 233e) auf mindestens einer der ersten und zweiten Oberflächen (1, 2) angeordnet ist, und
wobei das mehrschichtige elektronische Bauteil (200c, 200d, 200e) ferner eine erste Kontaktstruktur (261, 263) umfasst, die den Abdeckabschnitt (212, 213) durchdringt und die in einem äußersten Bereich in der ersten Richtung angeordnete erste Innenelektrode (221, 221d) oder erste Hilfselektrode (251, 253, 251d, 253d) mit der ersten Außenelektrode (231, 233, 231d, 233d, 231e, 233e) verbindet.

13. Mehrschichtiges elektronisches Bauteil (200d) nach Anspruch 12, wobei jede der ersten und zweiten Außenelektroden (231d, 233d, 232d, 234d) auf der zweiten Oberfläche (2) angeordnet und nicht auf der ersten Oberfläche (1) angeordnet ist.

14. Mehrschichtiges elektronisches Bauteil (200e) nach Anspruch 12,
wobei die erste Außenelektrode (231d, 233d, 231e, 233e) jeweils auf der ersten und zweiten Oberfläche (1, 2) angeordnet ist und die zweite Außenelektrode (232d, 234d, 232e, 234e) jeweils auf der ersten und zweiten Oberfläche (1, 2) angeordnet ist, und
wobei die auf der ersten Oberfläche (1) angeordneten ersten und zweiten Außenelektroden (231e, 233e, 232e, 234e) von den auf der zweiten Oberfläche (2) angeordneten ersten und zweiten Außenelektroden (231d, 233d, 232d, 234d) beabstandet sind.

15. Mehrschichtiges elektronisches Bauteil (200a, 200b, 200c) nach Anspruch 9, wobei eine Dicke eines an der fünften Oberfläche (5) oder der sechsten Oberfläche (6) freiliegenden Endes des ersten Anschlussabschnitts (221b, 221c) größer als eine Dicke eines mittleren Abschnitts des ersten Hauptabschnitts (221a) in der dritten Richtung ist.

## Revendications

1. Composant électronique multicouche (100a, 100b, 100c, 100d, 100e, 100f, 100g), comprenant :
un corps (110) comprenant une couche diélectrique (111) et des première et deuxième électrodes internes (121, 122, 121f, 122f) disposées en alternance avec la couche diélectrique (111), et comprenant des première et deuxième surfaces (1, 2) opposées l'une à l'autre dans une première direction, des troisième et quatrième surfaces (3, 4) reliées aux première et deuxième surfaces (1, 2) et opposées l'une à l'autre dans une deuxième direction, et des cinquième et sixième surfaces (5, 6) reliées aux première à quatrième surfaces (1, 2, 3, 4) et opposées l'une à l'autre dans une troisième direction;
une première électrode externe (131, 133, 131f, 133f, 131g, 133g) disposée sur au moins une surface parmi la première surface (1), la deuxième surface (2), la cinquième surface (5) et la sixième surface (6), et reliée aux premières électrodes internes (121, 121f);
une deuxième électrode externe (132, 134, 132f, 134f, 132g, 134g) disposée sur au moins une surface parmi la première surface (1), la deuxième surface (2), la troisième surface (3) et la quatrième surface (4), et reliée aux deuxièmes électrodes internes (122, 122f); et
une première électrode de connexion (141, 143, 141d, 143d) traversant la couche diélectrique (111) et reliant deux premières électrodes internes (121, 121f) adjacentes l'une à l'autre dans la première direction,
**caractérisé en ce que**, dans la première électrode de connexion (141, 143, 141d, 143d), une pluralité de premières électrodes de via (141a, 141b, 143a, 143b), décalées les unes par rapport aux autres dans une direction perpendiculaire à la première direction, sont empilées dans la première direction.

2. Composant électronique multicouche (100a, 100b, 100c, 100d, 100e, 100f, 100g) selon la revendication 1, dans lequel une pluralité des premières électrodes de connexion (141, 143, 141d, 143d) traversant la même couche diélectrique (111) sont agencées dans les deuxième et troisième directions.

3. Composant électronique multicouche (100b, 100c, 100d, 100e, 100f, 100g) selon la revendication 1, comprenant en outre :
une deuxième électrode de connexion (142, 144, 142d, 144d) traversant la couche diélectrique (111) et reliant deux deuxièmes électrodes internes (122, 122f) adjacentes l'une à l'autre dans la première direction,
dans lequel, dans la deuxième électrode de connexion (142, 144, 142d, 144d), une pluralité de deuxièmes électrodes de via (142a, 142b, 144a, 144b), décalées les unes par rapport aux autres dans la direction perpendiculaire à la première direction, sont empilées dans la première direction.

4. Composant électronique multicouche (100c) selon la revendication 1, comprenant en outre :
une première électrode auxiliaire (151, 153) espacée de l'une des deuxièmes électrodes internes (122) dans la troisième direction et disposée entre des premières électrodes de via (141a, 141b, 143a, 143b) adjacentes l'une à l'autre parmi la pluralité de premières électrodes de via (141a, 141b, 143a, 143b).

5. Composant électronique multicouche (100d) selon la revendication 1, dans lequel la première électrode de connexion (141d, 143d) comprend une pluralité de premières électrodes de connexion (141d, 143d), et deux premières électrodes de connexion (141d, 143d) adjacentes l'une à l'autre dans la première direction parmi la pluralité de premières électrodes de connexion (141d, 143d) sont décalées l'une par rapport à l'autre dans la direction perpendiculaire à la première direction.

6. Composant électronique multicouche (100e, 100f, 100g) selon la revendication 1,
dans lequel le corps (110) comprend une partie de formation de capacité (Ac) dans laquelle les première et deuxième électrodes internes (121, 122, 121f, 122f) sont disposées en alternance dans la première direction avec la couche diélectrique (111) interposée entre elles, et une partie de couverture (112, 113) disposée sur les deux surfaces de la partie de formation de capacité (Ac) opposées l'une à l'autre dans la première direction,
dans lequel la première électrode externe (131, 133, 131f, 133f, 131g, 133g) est disposée sur au moins une surface parmi les première et deuxième surfaces (1, 2), et
dans lequel le composant électronique multicouche (100e, 100f, 100g) comprend une première électrode de contact (161, 163) traversant la partie de couverture (112, 113) et reliant la première électrode interne (121, 121f), disposée dans une région la plus externe dans la première direction, à la première électrode externe (131, 133, 131f, 133f, 131g, 133g).

7. Composant électronique multicouche (100f) selon la revendication 6, dans lequel chacune des première et deuxième électrodes externes (131f, 133f, 132f, 134f) est disposée sur la deuxième surface (2) et n'est pas disposée sur la première surface (1).

8. Composant électronique multicouche (100g) selon la revendication 6,
dans lequel la première électrode externe (131f, 133f, 131g, 133g) est disposée sur chacune des première et deuxième surfaces (1, 2), et la deuxième électrode externe (132f, 134f, 132g, 134g) est disposée sur chacune des première et deuxième surfaces (1, 2), et
dans lequel les première et deuxième électrodes externes (131g, 133g, 132g, 134g) disposées sur la première surface (1) sont espacées des première et deuxième électrodes externes (131f, 133f, 132f, 134f) disposées sur la deuxième surface (2).

9. Composant électronique multicouche (200a, 200b, 200c, 200d, 200e), comprenant :
un corps (210) comprenant des première et deuxième surfaces (1, 2) opposées l'une à l'autre dans une première direction, des troisième et quatrième surfaces (3, 4) reliées aux première et deuxième surfaces (1, 2) et opposées l'une à l'autre dans une deuxième direction, et des cinquième et sixième surfaces (5, 6) reliées aux première à quatrième surfaces (1, 2, 3, 4) et opposées l'une à l'autre dans une troisième direction;
le corps (210) comprenant une première couche d'électrode interne (220a) comprenant une première couche diélectrique (211a) et une première électrode interne (221, 221d) disposée sur la première couche diélectrique (211a) et comprenant une première partie principale (221a) et une première portion de raccordement (221b, 221c) s'étendant depuis la première partie principale (221a) jusqu'à la cinquième surface (5) ou à la sixième surface (6),
le corps (210) comprenant une deuxième couche d'électrode interne (220b) comprenant une deuxième couche diélectrique (211b), une deuxième électrode interne (222, 222d) disposée sur la deuxième couche diélectrique (211b) et chevauchant la première partie principale (221a) dans la première direction, et une première électrode auxiliaire (251, 253, 251d, 253d) espacée de la deuxième électrode interne (222, 222d) dans la troisième direction,
dans lequel les première et deuxième couches d'électrode interne (220a, 220b) sont disposées en alternance dans la première direction;
une première électrode externe (231, 233, 231d, 233d, 231e, 233e) disposée sur au moins une surface parmi la première surface (1), la deuxième surface (2), la cinquième surface (5) et la sixième surface (6), et reliée à la première électrode interne (221, 221d);
une deuxième électrode externe (232, 234, 232d, 234d, 232e, 234e) disposée sur au moins une surface parmi la première surface (1), la deuxième surface (2), la troisième surface (3) et la quatrième surface (4), et reliée à la deuxième électrode interne (222, 222d);
une première électrode de via (241a, 243a) traversant la première couche diélectrique (211a) et reliant la première portion de raccordement (221b, 221c) à la première électrode auxiliaire (251, 253, 251d, 253d); et
une deuxième électrode de via (241b, 243b) traversant la deuxième couche diélectrique (211b) et reliant la première portion de raccordement (221b, 221c) à la première électrode auxiliaire (251, 253, 251d, 253d),
**caractérisé en ce que** la première électrode de via (241a, 243a) et la deuxième électrode de via (241b, 243b) sont décalées l'une par rapport à l'autre dans une direction perpendiculaire à la première direction.

10. Composant électronique multicouche (200a, 200b, 200c, 200d, 200e) selon la revendication 9,
dans lequel une pluralité des premières électrodes de via (241a, 243a) traversant la même première couche diélectrique (211a) sont disposées, et une pluralité des deuxièmes électrodes de via (241b, 243b) traversant la même deuxième couche diélectrique (211b) sont disposées,
dans lequel les premières électrodes de via (241a, 243a) traversant la même première couche diélectrique (211a) sont agencées dans les deuxième et troisième directions, et les deuxièmes électrodes de via (241b, 243b) traversant la même deuxième couche diélectrique (211b) sont agencées dans les deuxième et troisième directions, et
dans lequel la première couche diélectrique (211a) comprend une première région (R1, R3) disposée entre deux premières électrodes de via (241a, 243a) adjacentes l'une à l'autre dans la deuxième ou la troisième direction parmi une pluralité des premières électrodes de via (241a, 243a), et
dans lequel la pluralité des deuxièmes électrodes de via (241b, 243b) chevauche la première région (R1, R3) dans la première direction.

11. Composant électronique multicouche (200b, 200c, 200d, 200e) selon la revendication 9,
dans lequel la deuxième électrode interne (222, 222d) comprend une deuxième partie principale (222a) chevauchant la première électrode interne (221, 221d) dans la première direction, et une deuxième portion de raccordement (222b, 222c) s'étendant depuis la deuxième partie principale (222a) jusqu'à la troisième surface (3) ou à la quatrième surface (4),
dans lequel la première couche d'électrode interne (220a) comprend en outre une deuxième électrode auxiliaire (252, 254, 252d, 254d) disposée sur la première couche diélectrique (211a) et espacée de la première électrode interne (221, 221d) dans la deuxième direction,
dans lequel le composant électronique multicouche (200b, 200c, 200d, 200e) comprend en outre une troisième électrode de via (242a, 244a) traversant la première couche diélectrique (211a) et reliant la deuxième portion de raccordement (222b, 222c) à la deuxième électrode auxiliaire (252, 254, 252d, 254d), et une quatrième électrode de via (242b, 244b) traversant la deuxième couche diélectrique (211b) et reliant la deuxième portion de raccordement (222b, 222c) à la deuxième électrode auxiliaire (252, 254, 252d, 254d), et
dans lequel la troisième électrode de via (242a, 244a) et la quatrième électrode de via (242b, 244b) sont décalées l'une par rapport à l'autre dans la direction perpendiculaire à la première direction.

12. Composant électronique multicouche (200c, 200d, 200e) selon la revendication 9,
dans lequel le corps (210) comprend une partie de formation de capacité (Ac) dans laquelle des première et deuxième électrodes internes (221, 222, 221d, 222d) sont disposées en alternance avec la première couche diélectrique (211a) ou la deuxième couche diélectrique (211b) interposée entre elles, et une partie de couverture (212, 213) disposée sur les deux surfaces de la partie de formation de capacité (Ac) opposées l'une à l'autre dans la première direction,
dans lequel la première électrode externe (231, 233, 231d, 233d, 231e, 233e) est disposée sur au moins l'une des première et deuxième surfaces (1, 2), et
dans lequel le composant électronique multicouche (200c, 200d, 200e) comprend en outre une première structure de contact (261, 263) traversant la partie de couverture (212, 213) et reliant la première électrode interne (221, 221d) ou la première électrode auxiliaire (251, 253, 251d, 253d), disposée dans une région la plus externe dans la première direction, à la première électrode externe (231, 233, 231d, 233d, 231e, 233e).

13. Composant électronique multicouche (200d) selon la revendication 12, dans lequel chacune des première et deuxième électrodes externes (231d, 233d, 232d, 234d) est disposée sur la deuxième surface (2) et n'est pas disposée sur la première surface (1).

14. Composant électronique multicouche (200e) selon la revendication 12,
dans lequel la première électrode externe (231d, 233d, 231e, 233e) est disposée sur chacune des première et deuxième surfaces (1, 2), et la deuxième électrode externe (232d, 234d, 232e, 234e) est disposée sur chacune des première et deuxième surfaces (1, 2), et
dans lequel les première et deuxième électrodes externes (231e, 233e, 232e, 234e) disposées sur la première surface (1) sont espacées des première et deuxième électrodes externes (231d, 233d, 232d, 234d) disposées sur la deuxième surface (2).

15. Composant électronique multicouche (200a, 200b, 200c) selon la revendication 9, dans lequel une épaisseur d'une extrémité exposée à la cinquième surface (5) ou à la sixième surface (6) de la première portion de raccordement (221b, 221c) est supérieure à une épaisseur d'une partie centrale de la première partie principale (221a) dans la troisième direction.
